(19) Europäisches Patentamt
European Patent Office
Office européen des brevets

(11) EP 1 584 723 B1

(12) # EUROPEAN PATENT SPECIFICATION

(45) Date of publication and mention of the grant of the patent:
**16.03.2011 Bulletin 2011/11**

(21) Application number: **03768241.6**

(22) Date of filing: **25.12.2003**

(51) Int Cl.:
***D04H 1/42*** (2006.01) ***C08G 63/85*** (2006.01)
***D01F 6/62*** (2006.01)

(86) International application number:
**PCT/JP2003/016752**

(87) International publication number:
**WO 2004/061180 (22.07.2004 Gazette 2004/30)**

(54) **POLYESTER FIBER STRUCTURES**

POLYESTERFASERSTRUKTUREN

STRUCTURES DE FIBRES DE POLYESTER

(84) Designated Contracting States:
**AT BE BG CH CY CZ DE DK EE ES FI FR GB GR HU IE IT LI LU MC NL PT RO SE SI SK TR**

(30) Priority: **07.01.2003 JP 2003000940**
**09.01.2003 JP 2003002881**
**09.01.2003 JP 2003002880**
**07.03.2003 JP 2003061287**
**11.03.2003 JP 2003064813**
**11.03.2003 JP 2003064812**

(43) Date of publication of application:
**12.10.2005 Bulletin 2005/41**

(73) Proprietor: **Teijin Fibers Limited**
**Osaka-shi, Osaka 541-0054 (JP)**

(72) Inventors:
- **INAGAKI, Kenji,**
**c/o Teijin Fibers Limited**
**Ibaraki-shi,**
**Osaka 567-0006 (JP)**
- **BABA, Kenji,**
**c/o Teijin Fibers Limited**
**Ibaraki-shi,**
**Osaka 567-0006 (JP)**
- **SUZUKI, Atsushi,**
**c/o Teijin Fibers Limited**
**Ibaraki-shi,**
**Osaka 567-0006 (JP)**

(74) Representative: **Hallybone, Huw George et al**
**Carpmaels & Ransford**
**One Southampton Row**
**London**
**WC1B 5HA (GB)**

(56) References cited:
**EP-A- 1 110 988** **WO-A-99/10573**
**WO-A1-01/00706** **JP-A- 9 119 051**
**JP-A- 53 106 751** **JP-A- 54 043 295**
**JP-A- 54 045 397** **JP-A- 2000 319 370**
**JP-A- 2001 323 054** **JP-A- 2003 119 270**
**JP-B2- 59 046 258** **US-B1- 6 197 856**
**US-B1- 6 231 976** **US-B1- 6 359 079**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 584 723 B1

Printed by Jouve, 75001 PARIS (FR)

## Description

### Technical Field

The present invention relates to a polyester fiber structure. More specifically, it relates to a polyester fiber structure produced using a polyester resin with satisfactory color tone and excellent moldability.

### Background Art

Polyester resins, and particularly polyethylene terephthalate, polyethylene naphthalate, polytrimethylene terephthalate and polytetramethylene terephthalate resins, exhibit excellent mechanical, physical and chemical performance and are therefore widely used for fibers, films and other molded products. Especially when used in fiber structures, they are known to exhibit excellent mechanical strength and dimensional stability.

Such polymers for fiber structures, for example polyethylene terephthalate, are usually produced by first preparing an ethylene glycol ester of terephthalic acid and/or a lower polymer thereof and then heating it under reduced pressure in the presence of a polymerization catalyst for reaction to the desired degree of polymerization. Other polyesters are produced by similar processes.

It is known that the type of polycondensation catalyst used has a major effect on the quality of the resulting polyester, and antimony compounds are most widely used as polycondensation catalysts for polyethylene terephthalate.

A problem is associated with the use of antimony compounds, however, because prolonged continuous melt spinning of polyesters results in accumulated adhesion of foreign matter around the spinneret hole (hereinafter referred to simply as "spinneret adhesion" and redirection of the molten polymer flow (bending), which ultimately lead to fluff and yarn breakage or mottling of the physical properties of the fiber during the spinning and stretching steps. In addition, using polyester fibers comprising such polyesters for production of polyester fiber structures has resulted in problems such as poor process stability and low quality of the obtained polyester fiber structures.

As a means of solving these problems, there have been disclosed the use of the reaction products of titanium compounds and trimellitic acid as polyester production catalysts (for example, see Patent Document 1) and the use of the reaction products of titanium compounds and phosphorous acid esters as polyester production catalysts (for example, see Patent Document 2). While these methods do enhance the molten heat stability of polyesters to some degree, the enhancing effect is inadequate and the obtained polyester resins are in need of color tone improvement.

There have also been proposed titanium compound/phosphorus compound complexes as polyester production catalysts (for example, see Patent Document 3). However, although this method enhance the molten heat stability to some degree, the effect has been inadequate and the obtained polyesters are in need of color tone improvement.

[Patent Document 1]
Japanese Examined Patent Publication SHO No. 59-46258

[Patent Document 2]
Japanese Unexamined Patent Publication SHO No. 58-38722

[Patent Document 3]
Japanese Unexamined Patent Publication HEI No. 7-138354

US 6,231,976 discloses "fibers, particularly binder fibers, made from copolyesters and the copolyesters themselves [....] generally formed from a glycol component containing 1,3- or 1,4-cyclohexanedimethanol and ethylene glycol and at least one dicarboxylic acid component."

EP 1 110 988 discloses a polyester produced by polymerizing an aromatic difunctional carboxylic acid - alkyleneglycol ester and/or oligomer thereof in the presence of a catalyst including a reaction product of (A) a Ti compound component including a Ti compound (1) of formula (I) or a Ti compound (2) produced by reacting the Ti compound (1) with an aromatic difunctional carboxylic acid of the formula (III) or anhydride thereof, with (B) a P compound component selected from P compound (3)".

US 6,197,856 and WO 99/010573 disclose "binder fibers made from copolyesters, the copolyesters themselves and catalysts and processes for producing the copolyesters. More particularly [...] copolyesters formed from 1,4-cyclohexanedimethanol, ethylene glycol and terephthalic acid, napthalenedicarboxylic acid, 1,4-cyclohexane dicarboxylic acid and esters or anhydrides thereof."

In US6,359,079, "[p]olyoxypropylamines, polypropylene oxide polymers endcapped on one or both ends with carbamate groups, di- or tri-carboxylic acids, carboxylic acid halides, or esters or mixtures comprising one of the above with a hydrophilic polyester copolymer having repeating segments of ethylene terephthalate units containing 10-50%

by weight of polyoxyethylene terephthalate units useful for imparting a durable hydrophilic coating to polyester, polypropylene, polyethylene, cotton, polyamide or polyaramid fabric or fiber are disclosed."

Disclosure of the Invention

It is an object of the invention to solve the aforementioned problems of the prior art by providing a polyester fiber structure having satisfactory color tone (a high L* value and a low b* value), produced from high quality polyester fiber.

The polyester fiber structure of the invention is a polyester fiber structure comprising polyester fiber containing a polyester polymer as the major component, characterized in that
the fiber structure has a thickness of 5-100 mm and density of 0.01 to 0.10 g/cm$^3$, comprising main fiber made of polyester staple fiber and thermal bonding conjugated staple fiber wherein the polyester polymer is present in either or both the main fiber and the thermal bonding conjugated staple fiber,
the polyester polymer is obtained by polycondensation of an aromatic dicarboxylate ester in the presence of a catalyst,
the catalyst comprises at least one ingredient selected from among mixture (1) and reaction product (2) below,
mixture (1) is a mixture of the following components (A) and (B):

(A) a titanium compound component composed of at least one compound selected from the group consisting of:

(a) titanium alkoxides represented by the following general formula (I):

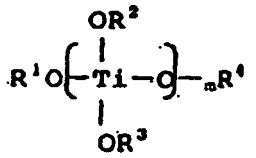

**(I)**

[wherein $R^1$, $R^2$, $R^3$ and $R^4$ each independently represent one species selected from among $C_{1-20}$ alkyl groups and phenyl groups, m represents an integer of 1-4, and when m is an integer of 2, 3 or 4, the two, three or four $R^2$ and $R^3$ groups may be the same or different], and
(b) reaction products of titanium alkoxides of general formula (I) above with aromatic polyvalent carboxylic acids represented by the following general formula (II) :

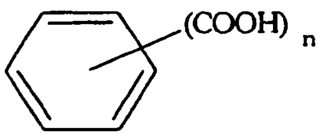

**(II)**

[wherein n represents an integer of 2-4]
or their anhydrides, and
(B) a phosphorus compound component composed of at least one compound represented by the following general formula (III):

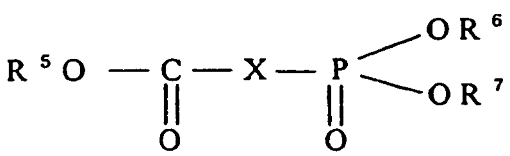

**(III)**

[wherein $R^5$, $R^6$ and $R^7$ each independently represent $C_{1-4}$ alkyl, and X represents at least one species selected from among $-CH_2-$ and $-CH_2(Y)$ (where Y represents phenyl)],
mixture (1) is used with a mixing ratio such that the ratio (%) $M_{Ti}$ of the millimoles of elemental titanium in the titanium

compound component (A) with respect to the number of moles of the aromatic dicarboxylate ester and the ratio (%) $M_p$ of the millimoles of elemental phosphorus in the phosphorus compound component (B) with respect to the number of moles of the aromatic dicarboxylate ester satisfy the following relational expressions (i) and (ii):

$$1 \leq M_p/M_{Ti} \leq 15 \qquad (i)$$

$$10 \leq M_p+M_{Ti} \leq 100 \qquad (ii),$$

and reaction product (2) is the reaction product of the following components (C) and (D):

(C) a titanium compound component composed of at least one compound selected from the group consisting of:

(c) titanium alkoxides represented by the following general formula (IV):

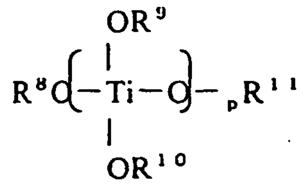

(IV)

[wherein $R^8$, $R^9$, $R^{10}$ and $R^{11}$ each independently represent $C_{1-20}$ alkyl, p represents an integer of 1-3, and when p is 2 or 3, the two or three $R^9$ and $R^{10}$ groups may be the same or different], and

(d) reaction products of titanium alkoxides of general formula (IV) above with aromatic polyvalent carboxylic acids represented by general formula (II) above or their anhydrides, and

(D) a phosphorus compound component composed of at least one phosphorus compound represented by the following general formula (V):

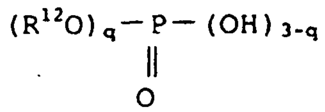

(V)

[wherein $R^{12}$ represents $C_{1-20}$ alkyl or $C_{6-20}$ aryl, and q represents an integer of 1 or 2].

Component (A) of the catalyst mixture (1) and component (C) of the reaction product (2) for the catalyst in the polyester fiber structure of the invention preferably contain the respective titanium alkoxide (a) and titanium alkoxide (c) each in a reaction molar ratio in the range of 2:1 to 2:5 with respect to the aromatic polyvalent carboxylic acid or its anhydride.

In the reaction product (2) for the catalyst of the polyester fiber structure of the invention, the reaction ratio of component (D) with respect to component (C) is in the range of 1:1 to 3:1, in terms of the ratio of the moles of phosphorus atoms in component (D) to the moles of titanium atoms in component (C) (P/Ti).

The phosphorus compound of general formula (V) for reaction product (2) in the polyester fiber structure of the invention is preferably selected from among monoalkyl phosphates.

The aromatic dicarboxylate ester in the polyester fiber structure of the invention is preferably produced by transesterification of an aromatic dicarboxylic acid dialkyl ester and an alkylene glycol ester.

The aromatic dicarboxylic acid in the polyester fiber structure of the invention is preferably selected from among terephthalic acid, 1,2-naphthalenedicarboxylic acid, phthalic acid, isophthalic acid, diphenyldicarboxylic acid and diphenoxyethanedicarboxylic acid, and the alkylene glycol is preferably selected from among ethylene glycol, butylene glycol, trimethylene glycol, propylene glycol, neopentyl glycol, hexanemethylene glycol and dodecanemethylene glycol.

The polyester polymer of the polyester fiber structure of the invention preferably has an L* value of 77-85 and

a by value of 2-5 based on the L*a*b* color system (JIS Z8729).

The thermal bonding conjugated staple fiber of the polyester fiber structure of the invention may have a side-by-side structure, or the thermal bonding conjugated staple fiber may have a concentric or eccentric core-sheath structure, where the concentric or eccentric core may be formed of a fiber-forming thermoplastic polymer and the concentric or eccentric sheath may be formed of a heat sealing polymer.

In the polyester fiber structure of the invention, the fiber-forming thermoplastic polymer of the thermal bonding conjugated staple fiber is preferably a polyester polymer. The heat sealing polymer of the thermal bonding conjugated staple fiber is preferably selected from among polyurethane elastomers, polyester elastomers, inelastic polyester homopolymers and copolymers, polyolefin homogolymers and copolymers, and polyvinyl alcohol polymers.

A fiber structure with a thickness of 5-100 mm and a density of 0.01 to 0.10 g/cm$^3$ in a polyester fiber structure according to the invention is thermally anchored at least at some of the points of contact between the thermal bonding conjugated staple fibers and main fibers and/or points of contact between the thermal bonding conjugated staple fibers themselves.

The polyester fiber structure of the invention may also be used for purposes which involve contact with food.

Best Mode for Carrying Out the Invention

The polyester fiber structure of the invention is formed using a polyester fiber comprising a polyester polymers as the major component.

The polyester polymer is produced by polycondensation of an aromatic dicarboxylate ester in the presence of a catalyst. The polycondensation catalyst comprises at least one selected from among (1) mixtures of the titanium compound component (A) and phosphorus compound component (B) described below and (2) reaction products of the titanium compound component (C) and phosphorus compound component (D) described below.

The titanium compound (A) of the polycondensation catalyst mixture (1) is composed of at least one compound selected from the group consisting of:

(a) titanium alkoxides represented by the following general formula (I):

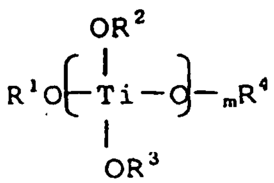

(I)

[wherein R$^1$, R$^2$, R$^3$ and R$^4$ each independently represent one species selected from among $C_{1-20}$ and preferably $C_{1-6}$ alkyl groups and phenyl groups, m represents an integer of 1-4 and preferably 2-4, and when m is an integer of 2, 3 or 4, the two, three or four R$^2$ and R$^3$ groups may be the same or different], and

(b) reaction products of titanium alkoxides of general formula (I) above with aromatic polyvalent carboxylic acids represented by the following general formula (II):

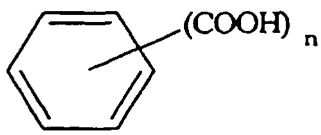

(II)

[wherein n represents an integer of 2-4 and preferably 3-4]
or their anhydrides.

The phosphorus compound (B) of the polycondensation catalyst mixture (1) is composed of at least one compound represented by the following general formula (III):

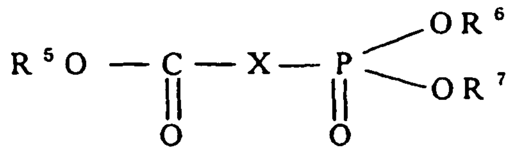

(III)

[wherein $R^5$, $R^6$ and $R^7$ each independently represent $C_{1-4}$ alkyl, and X represents at least one species selected from among $-CH_2-$ and $-CH_2$ (Y) (where Y represents phenyl)].

The titanium compound component (C) of the reaction product (2) for the polycondensation catalyst is composed of at least one compound selected from the group consisting of:

(c) titanium alkoxides represented by the following general formula (IV):

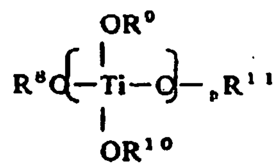

(IV)

[wherein $R^8$, $R^9$, $R^{10}$ and $R^{11}$ each independently represent $C_{1-20}$ and preferably $C_{1-6}$ alkyl, p represents an integer of 1-3 and preferably 1-2, and when p is 2 or 3, the two or three $R^9$ and $R^{10}$ groups may be the same or different], and

(d) reaction products of titanium alkoxides of general formula (IV) above with aromatic polyvalent carboxylic acids represented by general formula (II) above or their anhydrides.

The phosphorus compound component (D) of the reaction product (2) for the polycondensation catalyst is composed of at least one phosphorus compound represented by the following general formula (V):

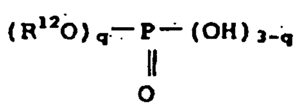

(V)

[wherein $R^{12}$ represents $C_{1-20}$ alkyl or $C_{6-20}$ aryl, and q represents an integer of 1 or 2].

When a mixture (1) of the titanium compound component (A) and the phosphorus compound component (B) is used as the polycondensation catalyst, the titanium alkoxide (a) represented by general formula (I) or the reaction product (b) of the titanium alkoxide (a) and the aromatic carboxylic acid represented by general formula (II) or its anhydride, used as the titanium compound component (A), have high solubility and compatibility for polyester polymers, and therefore even if residue of the titanium compound component (A) remains in the polyester polymer obtained by polycondensation, there is no accumulation of foreign matter around the spinneret during melt spinning, so that a polyester filament of satisfactory quality can be produced with high spinning efficiency.

As titanium alkoxides (a) represented by general formula (I) to be used in the polycondensation catalyst titanium compound component (A) according to the invention, there are preferred tetraisopropoxytitanium, tetrapropoxytitanium, tetra-n-butoxytitanium, tetraethoxytitanium, tetraphenoxytitanium, octaalkyl trititanate and hexaalkyl dititanate.

As titanium alkoxides (c) represented by general formula (IV) to be used in the polycondensation catalyst titanium compound component (C) according to the invention, there may be mentioned titanium tetraalkoxides such as titanium tetrabutoxide, titanium tetraisopropoxide, titanium tetrapropoxide and titanium tetraethoxide and alkyl titanates such as octaalkyl trititanate and hexaalkyl dititanate, but titanium tetraalkoxides are preferred for use because of their satisfactory reactivity with the phosphorus compound components used for the invention, and titanium tetrabutoxide is particularly preferred for use.

The aromatic polyvalent carboxylic acid of general formula (II) or its anhydride which is reacted with the titanium alkoxide (a) or (c) is preferably selected from among phthalic acid, trimellitic acid, hemimellitic acid, pyromellitic acid,

and their anhydrides. In particular, using trimellitic anhydride will yield a reaction product exhibiting high affinity for the polyester polymer, and is effective for preventing accumulation of foreign matter.

When the titanium alkoxide (a) or (c) is reacted with the aromatic polyvalent carboxylic acid of general formula (II) or its anhydride, it is preferred, for example, to dissolve the aromatic polyvalent carboxylic acid or its anhydride in a solvent, add the titanium alkoxide (a) or (c) dropwise to the solution and heat the mixture for at least 30 minutes at a temperature of 0-200°C. The solvent used in this case is preferably selected as desired from among ethanol, ethylene glycol, trimethylene glycol, tetramethylene glycol, benzene and xylene.

There is no particular restriction on the molar ratio for reaction between the titanium alkoxide (a) or (c) with the aromatic polyvalent carboxylic acid of general formula (II) or its anhydride, but if the proportion of the titanium alkoxide is too high, the color tone of the resulting polyester may be impaired or the softening point may be lowered, whereas if the proportion of the titanium alkoxide is too low, the polycondensation reaction may be impeded. The molar ratio for the reaction between the titanium alkoxide (a) or (c) with the aromatic polyvalent carboxylic acid of general formula (II) or its anhydride is therefore preferably in the range of (2:1) to (2:5).

The reaction product (b) or (d) obtained by the reaction may be used directly, or it may be used after purification by recrystallization with acetone, methyl alcohol and/or ethyl acetate.

The phosphorus compound (phosphonate compound) of general formula (III) to be used for a phosphorus compound component (B) of the polycondensation catalyst mixture (1) according to the invention is preferably selected from among dimethyl esters, diethyl esters, dipropyl esters and dibutyl esters of phosphonic acid derivatives such as carbomethoxymethane-phosphonic acid, carboethoxymethanephosphonic acid, carbopropoxymethanephosphonic acid, carbobutoxymethane-phosphonic acid, carbomethoxyphenylmethanephosphonic acid, carboethoxyphenylmethanephosphonic acid, carbopropoxyphenyl-methanephosphonic acid, carbobutoxyphenylmethanephosphonic acid, and the like.

When a phosphorus compound component (B) composed of a phosphorus compound (phosphonate compound) of general formula (III) is used for polycondensation reaction of the aromatic dicarboxylate ester, the reaction with the titanium compound component (A) proceeds more moderately as compared to phosphorus compounds ordinarily used as reaction stabilizers, and therefore the catalytically active life of the titanium compound component (A) during the polycondensation reaction process is longer and as a result, a smaller proportion of the titanium compound component (A) may be used with respect to the amount of the aromatic dicarboxylate ester in the polycondensation reaction system. Also, even if a large amount of stabilizer is added to the polycondensation reaction system containing a phosphorus compound component (B) composed of a phosphorus compound of general formula (III), there is no reduction in thermal stability of the obtained polyester polymer and its color tone is also satisfactory.

When the mixture (1) is used as the polycondensation catalyst according to the invention, the mixture (1) is used with a mixing ratio such that the ratio (%) $M_{Ti}$ of the millimoles of elemental titanium in the titanium compound component (A) with respect to the number of moles of the aromatic dicarboxylate ester and the ratio (%) $M_p$ of the millimoles of elemental phosphorus in the phosphorus compound component (B) with respect to the number of moles of the aromatic dicarboxylate ester satisfy the following relational expressions (i) and (ii):

$$1 \leq M_p/M_{Ti} \leq 15 \qquad (i)$$

$$10 \leq M_p+M_{Ti} \leq 100 \qquad (ii).$$

The ratio $M_p/M_{Ti}$ is between 1 and 15, and preferably between 2 and 10. If the ratio $M_p/M_{Ti}$ is less than 1, the color tone of the obtained polyester polymer may be yellowish, while if it is greater than 15, the polycondensation reactivity of the polycondensation catalyst of such a composition will be insufficient, making it difficult to obtain the intended polyester polymer. The range for the ratio $M_p/M_{Ti}$ according to the invention is relatively narrow compared to that for conventional Ti-P catalysts, but establishing such a range produces an excellent effect which has not been obtained with conventional Ti-P catalysts.

The value of the sum ($M_p$+$M_{Ti}$) is between 10 and 100, and preferably between 20 and 70. If the value of ($M_p$+$M_{Ti}$) is less than 10, the fiber forming property of the obtain polyester polymer, the production efficiency in the melt spinning process and the performance of the obtained fibers will be inadequate. If the value of ($M_p$+$M_{Ti}$) is greater than 100, a small but significant degree of foreign matter accumulation will occur around the spinneret when the obtained polyester polymer is used for melt spinning. The value of $M_{Ti}$ is generally preferred to be 2-15% and more preferably 3-10%.

When the reaction product (2) is used as a polycondensation catalyst according to the invention, the phosphorus compound of general formula (V) used as the phosphorus compound (D) may be, for example, a monoalkyl phosphate

such as mono-n-butyl phosphate, monohexyl phosphate, monododecyl phosphate, monolauryl phosphate or monooleyl phosphate; a monoaryl phosphate such as monophenyl phosphate, monobenzyl phosphate, mono (4-ethylphenyl) phosphate, monobiphenyl phosphate, mononaphthyl phosphate or monoanthryl phosphate; a dialkyl phosphate such as diethyl phosphate, dipropyl phosphate, dibutyl phosphate, dilauryl phosphate or dioleyl phosphate, or a diaryl phosphate such as diphenyl phosphate. Preferred among these are monoalkyl phosphates or monoaryl phosphates wherein q in formula (V) is 1.

The phosphorus compound component (D) used for the invention may be a mixture of two or more phosphorus compounds of general formula (V), and as examples of preferred combinations there may be mentioned mixtures of monoalkyl phosphates and dialkyl phosphates or mixtures of monophenyl phosphates and diphenyl phosphates. Particularly preferred are compositions wherein a monoalkyl phosphate constitutes at least 50% and especially at least 90% of the mixture based on the total weight of the mixture.

The method of preparing the reaction product of the titanium compound component (C) and phosphorus compound component (D) may involve, for example, combining the components (C) and (D) and heating them in glycol. Specifically, heating a glycol solution containing the titanium compound component (C) and the phosphorus compound component (D) will cause clouding of the glycol solution with precipitation of the components (C) and (D) as reaction products. The precipitate may be collected for use as a catalyst for polyester polymer production.

The glycol used in this case is preferably the same glycol component for the polyester to be produced using the obtained catalyst. For example, ethylene glycol is preferred when the polyester is polyethylene terephthalate, 1,3-propanediol is preferred when it is polytrimethylene terephthalate and tetramethylene glycol is preferred when it is polytetramethylene terephthalate.

The polycondensation reaction product (2) according to the invention may be produced by a method of simultaneously combining the titanium compound component (C) and phosphorus compound (D) and the glycol, and heating them. However, since heating causes the titanium compound component (C) and phosphorus compound component (D) to react and produce a precipitated reaction product which is insoluble in glycol, it is preferred for the reaction up to precipitation to proceed in a uniform manner. In order to efficiently obtain the reaction precipitate, therefore, the preferred production process is one in which separate glycol solutions of the titanium compound component (C) and phosphorus compound component (D) are prepared beforehand, and the solutions are then combined and heated.

The temperature for the reaction between components (C) and (D) is preferably between 50°C and 200°C, and the reaction time is preferably from 1 minute to 4 hours. If the reaction temperature is too low, the reaction may proceed insufficiently or an excessive reaction time may be required, making it impossible to efficiently obtain a reaction precipitate by uniform reaction.

The mixing proportion of the titanium compound component (C) and phosphorus compound component (D) heated to reaction in glycol is in the range of 1.0 to 3.0 and more preferably 1. 5 to 2.5, as the molar ratio of phosphorus atoms with respect to titanium atoms. Within this range, the phosphorus compound component (D) and titanium compound component (C) will react almost completely to avoid the presence of an incomplete reaction product, and therefore the reaction product may be used directly to give a polyester polymer with a satisfactory color tone. In addition, the virtual lack of excess unreacted phosphorus compound (V) results in high productivity without impeding the polyester polymerization reactivity.

The reaction product (2) for the polycondensation catalyst used for the invention preferably comprises a compound represented by the following general formula' (VI):

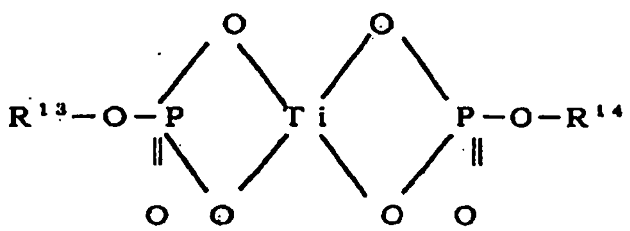

(VI)

(wherein $R^{13}$ and $R^{14}$ each independently represent at least one species selected from among $C_{1-10}$ alkyl groups derived from $R^8$, $R^9$, $R^{10}$ and $R^{11}$ in general formula (IV) representing the titanium alkoxide for titanium compound component (C) and $R^{12}$ in general formula (V) representing the phosphorus compound for phosphorus compound component (D), and $C_{6-12}$ aryl groups derived from $R^{12}$ in the phosphorus compound (V)).

Since the reaction product of the titanium compound and the phosphorus compound (V) represented by formula (VI) has high catalytic activity, polyester polymers obtained using it have satisfactory color tone (low b value), and exhibit satisfactorily practical polymer performance with a sufficiently low content of acetaldehydes, residual metals and cyclic

trimers for practical use. The reaction product represented by formula (VI) is preferably present at 50 wt% or greater and more preferably at 70 wt% or greater.

If the aromatic dicarboxylate ester is subjected to polycondensation in the presence of the reaction product (2), it may be used as a polyester production catalyst directly, without separating the glycol and the precipitated reaction product (2) obtained in the aforementioned manner. Also, after the precipitate has been separated from the glycol solution containing the precipitated reaction product (2) by means such as centrifugal precipitation or filtration, the precipitated reaction product (2) may be recrystallized with, for example, acetone, methyl alcohol and/or water for purification and the purified product used as the catalyst. The structure of the catalyst may be confirmed by solid NMR and XMA metal quantitative analysis.

The polyester polymer used for the invention is obtained by polycondensation of an aromatic dicarboxylate ester in the presence of a catalyst comprising the aforementioned mixture (1) of a titanium compound component (A) and phosphorus compound (phosphonate compound) (B) and/or the reaction product (2) of a titanium compound component (C) and a phosphorus compound component (D). According to the invention, the aromatic dicarboxylate ester is preferably a diester comprising an aromatic dicarboxylic acid component and an aliphatic glycol component.

The aromatic dicarboxylic acid is preferably composed mainly of terephthalic acid. More specifically, terephthalic acid preferably constitutes at least 70 mole percent based on the total aromatic dicarboxylic acid component content. As examples of preferred aromatic dicarboxylic acids other than terephthalic acid there may be mentioned phthalic acid, isophthalic acid, naphthalenedicarboxylic acid, diphenyldicarboxylic acid and diphenoxyethanedicarboxylic acid.

The aliphatic glycol component is preferably an alkylene glycol, of which there may be used, for example, ethylene glycol, trimethylene glycol, propylene glycol, tetramethylene glycol, neopentyl glycol, hexanemethylene glycol and dodecamethylene glycol, with ethylene glycol being particularly preferred.

According to the invention, the polyester polymer is preferably a polyester comprising as its main repeating unit ethylene terephthalate composed of terephthalic acid and ethylene glycol. "Main" means that the ethylene terephthalate repeating unit constitutes at least 70 mole percent of the total repeating units in the polyester.

The polyester polymer used for the invention may also be a mixed polyester obtained by copolymerization of polyester components as the acid component or diol component.

As mixed carboxylic acid components there may be used the aforementioned aromatic dicarboxylic acids, of course, as well difunctional carboxylic acid components including aliphatic dicarboxylic acids such as adipic acid, sebacic acid, azelaic acid and decanedicarboxylic acid and alicyclic dicarboxylic acids such as cyclohexanedicarboxylic acid, or their ester-forming derivatives, as starting materials. As mixed diol components there may be used the aforementioned aliphatic diols, of course, as well as alicyclic glycols such as cyclohexanedimethanol and aromatic diols such as bisphenol, hydroquinone and 2,2-bis(4-β-hydroxyethoxyphenyl)propane, as starting materials.

In addition, there may also be used mixed polyester polymers obtained by copolymerization of polyfunctional compounds such as trimesic acid, trimethylolethane, trimethylolpropane, trimethylolmethane and pentaerythritol as mixed components.

Such polyester polymers and mixed polyester polymers may be used alone or in combinations of two or more.

According to the invention, the polyester polymer used is preferably the polycondensation product of an aromatic dicarboxylate ester composed of an aromatic dicarboxylic acid and aliphatic glycol, as described above. The aromatic dicarboxylate ester may also be produced by diesterification reaction of an aromatic dicarboxylic acid and an aliphatic glycol, or it may be produced by transesterification of an aromatic dicarboxylic acid dialkyl ester and an aliphatic glycol. However, methods involving transesterification using dialkyl esters of aromatic dicarboxylic acids as starting materials are more advantageous than methods of diesterification using aromatic dicarboxylic acids as starting materials, because they produce less debris of the phosphorus compound added as a phosphorous stabilizer during the polycondensation reaction.

Also, all or a portion of the titanium compound component (A) or (C) is preferably added before initiation of the transesterification reaction, for use as a double reaction catalyst, i.e. a transesterification reaction catalyst and polycondensation reaction catalyst. This will allow a reduction in the titanium compound content of the final polyester. More specifically, in the case of polyethylene terephthalate, for example, transesterification reaction between an aromatic dicarboxylic acid dialkyl ester (composed mainly of terephthalic acid) and ethylene glycol is preferably carried out in the presence of the titanium compound component (A) comprising (a) at least one compound selected from the group consisting of titanium alkoxides represented by general formula (I) above and (b) products of reaction between titanium alkoxides of general formula (I) with aromatic polyvalent carboxylic acids represented by general formula (II) above or their anhydrides. A phosphorus compound (phosphonate compound) represented by general formula (III) above, or the reaction product of a titanium compound component (C) and the aforementioned phosphorus compound component (D), is preferably further added to the reaction mixture comprising the diester of the aromatic dicarboxylic acid and ethylene glycol obtained by the transesterification reaction, and polycondensation reaction is conducted in their presence.

The transesterification reaction will normally be conducted under ordinary pressure, but conducting it under pressurization of 0.05-0.20 MPa will further promote the reaction catalyzed by the action of the titanium compound

component (A) while also avoiding bulk generation of diethylene glycol by-product, so that more favorable thermal stability and other properties can be achieved. The temperature is preferably 160-260°C.

When the aromatic dicarboxylic acid used for the invention is terephthalic acid, terephthalic acid and dimethyl terephthalate are used as the starting materials for the polyester. In this case, there may be used recovered dimethyl terephthalate obtained by depolymerization of a polyalkylene terephthalate, or recovered terephthalic acid obtained by hydrolysis thereof. The use of reprocessed polyesters from salvaged PET bottles, fiber products, polyester film products and the like is preferred from the standpoint of effective utilization of resources.

The polycondensation reaction may be carried out in a single tank or in a plurality of separate tanks. The obtained product is a polyester according to the invention, and the polyester obtained by the polycondensation process is usually extruded in a molten state and cooled to form particles (chips).

The polyester used for the invention, which is obtained by the polycondensation process described above, may be further subjected to solid phase polycondensation if desired. The solid phase polycondensation consists of one or more steps and is carried out at a temperature of 190-230°C under a pressure of 1 kPa to 200 kPa in an inert gas atmosphere such as nitrogen, argon or carbon dioxide gas.

The particulate polyester obtained from the solid phase polycondensation process is then subjected to water treatment by contact with water, steam, a steam-laden inert gas or steam-laden air as necessary, for inactivation of the catalyst remaining in the chips.

The polyester production process described above comprising esterification and polycondensation steps may be carried out in a batch, semi-continuous or continuous system.

The polyester polymer used for the invention is preferably selected from among polyethylene terephthalate, polytrimethylene terephthalate and polytetramethylene terephthalate.

The polyester polymer used for the invention also preferably has an L* value of 77-85 and a b* value of 2-5 based on the L*a*b* color system (JIS Z8729).

The limiting viscosity of the polyester used for the invention obtained in the manner described above is preferably in the range of 0.40-0.80, more preferably 0.45-0.75 and even more preferably 0.50-0.70. The limiting viscosity is preferably not less than 0.40 because the strength of the fibers may be insufficient. On the other hand, a limiting viscosity of greater than 0.80 is uneconomical because it requires excessive raising of the limiting viscosity of the starting polymers.

The polyester used for the invention may, if necessary, contain small amounts of additives such as antioxidants, ultraviolet absorbers, flame retardants, fluorescent brighteners, delustering agents, color correctors, antifoaming agents, antistatic agents, antimicrobial agents, light stabilizers, thermal stabilizers, light blockers or the like, and preferably there are added titanium dioxide as a delustering agent and antioxidants as stabilizers.

The titanium dioxide used preferably has a mean particle size of 0.01-2 μm, and is preferably included in the polyester polymer at 0.01-10 wt%.

Incidentally, the catalyst-derived titanium content in the polyester polymer does not include the titanium derived from any titanium dioxide added as a delustering agent.

When the polyester polymer contains titanium dioxide as a delustering agent, the titanium dioxide of the delustering agent may be removed from the polyester polymer sample for measurement by dissolving the polyester polymer in hexafluoroisopropanol, supplying the solution to centrifugation to separate and precipitate the titanium dioxide particles from the solution, separating and collecting the supernatant liquid by the gradient method and evaporating off the solvent from the collected fraction to prepare the testing sample.

As antioxidants there are preferably used hindered phenol-based antioxidants. An antioxidant is preferably added at no greater than 1 wt% and more preferably 0.005-0.5 wt%. Addition in excess of 1 wt% will result in a saturated effect and may cause scum production during melt spinning. Hindered phenol-based antioxidants may also be used in combination with thioether-based secondary antioxidants.

There are no particular restrictions on the method of adding such antioxidants to the polyester, and they may be added at any desired stage from initiation of the transesterification reaction to completion of the polycondensation reaction.

According to the invention, there are no particular restrictions on the method of producing fibers from the polyester polymer, and any conventional publicly known polyester melt spinning process may be employed. For example, the polyester polymer may be melted and spun in a temperature range of 270-300°C, wherein the melt spinning speed is preferably 400-5000 m/min. A spinning speed within this range will yield fibers with sufficient strength and allow stable winding. Stretching may be carried out after winding the undrawn polyester fibers, or continuously without winding.

The shape of the spinneret used for production of the polyester fiber is also without restrictions and may be circular or irregular in shape (triangular or other polygonal shapes, flat, etc.), and either solid or hollow.

There are no restrictions on the form of the polyester fibers used for the invention, and they may be long fibers or staple fibers. The polyester fibers used for the invention may also be twisted or untwisted. In addition, the polyester fibers used for the invention may be subjected to false twisted/crimping, Taslan processing, interlacing, or the like.

The polyester fiber structure of the invention is a fiber structure comprising polyester fiber containing the

aforementioned polyester polymer as the major component, characterized in that said fiber structure is fiber structures having thicknesses of 5-100 mm and density of 0.10 to 0.10 g/cm$^3$, comprising main fiber made of polyester stable fiber and thermal bonding conjugated staple fiber wherein the aforementioned polyester polymer is present in either or both the main fiber and the thermal bonding composite stable fiber.

The mode of the invention will now be explained, namely, fiber structures having thicknesses of 5-100 mm, comprising main fiber composed of polyester stable fiber and thermal bonding conjugated staple fiber wherein the polyester polymer is obtained using the aforementioned catalyst in either or both the main fiber and the thermal bonding composite stable fiber.

Such fiber structures are composed of thermal bonding conjugated staple fiber and polyester staple fiber (main fiber), and have thermal anchoring points created by heat treatment at least at some of the points of contact between both fibers and/or points of contact between the thermal bonding conjugated staple fibers themselves.

During this step, the polyester polymer must be comprised in either or both the polyester staple fiber (main fiber) and the thermal bonding conjugated staple fiber.

The aforementioned thermal bonding conjugated staple fiber consists of staple fibers comprising a heat sealing polymer and a fiber-forming thermoplastic polymer with'at least the heat sealing polymer exposed on the fiber surfaces.

As heat sealing polymers there may be mentioned polyurethane elastomers, polyester elastomers, inelastic polyester polymers and copolymers, polyolefin polymers and copolymers, and polyvinyl alcohol polymers. Polyester polymers and their copolymers and polyester elastomers, obtained using the aforementioned catalyst, are preferred.

As copolymerized polyester polymers there may be mentioned copolymer esters comprising prescribed numbers of aliphatic dicarboxylic acids such as adipic acid and sebacic acid, aromatic dicarboxylic acids such as phthalic acid, isophthalic acid and naphthalenedicarboxylic acid and/or alicyclic dicarboxylic acids such as hexahydroterephthalic acid and hexahydroisophthalic acid and aliphatic or alicyclic diols such as diethylene glycol, polyethylene glycol, propylene glycol and paraxylene glycol, with addition of oxy acids such as parahydroxybenzoic acid as desired, and a preferred example is polyester obtained by addition copolymerization of isophthalic acid and 1,6-hexanediol with terephthalic acid and ethylene glycol.

As examples of polyolefin polymers there may be mentioned low density polyethylene, high density polyethylene, polypropylene and the like.

Examples of fiber-forming thermoplastic polymers to be used in combination with the heat sealing polymer include polyesters such as polyethylene terephthalate, polypropylene terephthalate and polybutylene terephthalate, and polyolefin polymers. The polyester polymers mentioned above obtained using the aforementioned catalyst are particularly preferred.

The combination of the heat sealing polymer and the fiber-forming thermoplastic polymer most preferably employs a polyester-based elastomer with a melting point in the range of 70-210°C (more preferably 100-180°C) as the heat sealing polymer and a polyester polymer with a melting point of 10°C higher than the melting point of the polyester-based elastomer as the fiber-forming thermoplastic polymer.

The thermal bonding conjugated staple fiber is preferably conjugated so that the heat sealing polymer (E) and the fiber-forming thermoplastic polymer (P) are in an area ratio of E:P = 20:80 to 80:20 in the fiber lateral cross-section. The conjugated form of the components (E) and (P) may be any publicly known conjugated form, such as concentric core-sheath, eccentric core-sheath, side-by-side, sea-island conjugated spun fiber or sea-island blended spun fiber, orange section-oriented (split) fiber and the like, but the distribution must be such that a portion of component (E) is exposed on the fiber surfaces, and preferably component (E) constitutes at least 30% of the circumference of the fiber cross-section. Side-by-side or eccentric core-sheath fibers are particularly favorable in that a latent crimping function can be easily imparted for development of minute crimping during heat treatment when the fiber structure is molded, so that entanglement between the fibers can be increased for an enhanced bonding property.

The single fiber size of the thermal bonding conjugated staple fiber is preferably in the range of 0.5-200 dtex and more preferably 2-100 dtex. These ranges are preferred in order to result in an optimum number of thermal bonding points formed in the fiber structure by the thermal bonding treatment used to produce the fiber structure, thereby yielding sufficient strength and minimizing agglutination during fabrication of the thermal bonding conjugated staple fiber.

The fiber lateral cross-section shapes do not need to be circular and may instead be polygonal, fin-shaped, ball-shaped, etc., although they are preferably circular from the standpoint of forming staple fibers and passing through the carding step. The fibers may also have one or more hollow portions.

The thermal bonding conjugated staple fiber may be produced by a conventional publicly known process.

When thermal bonding conjugated fiber is cut into staple fiber, the cut lengths are preferably in the range of 5-100 mm and particularly in the range of 15-95 mm. This range yields especially favorable carding properties and fiber structure bonding properties.

The thermal bonding conjugated staple fiber may also be crimped so long as it produces no problems during the process, and in such case the number of crimps is preferably in the range of 8-20 per 25 mm, with a crimping ratio in the range of 6-18%.

The polyester staple fiber used as the main fiber may be composed of a publicly known polyester, but it is preferably composed of the aforementioned polyester polymer obtained using the catalyst described above. The single fiber size of the polyester staple fiber is preferably in the range of 0.5-150 dtex and more preferably 2-50 dtex from the standpoint of the fiber structure bulk, cushion property and resilience, as well as texture. From the standpoint of the fiber structure bulk and cushion property, the number of crimps in the polyester staple fiber is preferably in the range of 3-30 per 25 mm and more preferably in the range of 5-20 per 25 mm, and the crimping ratio is preferably in the range of 6-50% and more preferably in the range of 12-40%. The cut lengths are preferably in the range of 5-100 mm and especially in the range of 15-90 mm.

The cross-sectional shapes of the polyester staple fibers are preferably circular, flat, triangular, hexagonal or hollow, as appropriately selected according to the intended use.

The polyester staple fiber may be produced by employing a conventional publicly known process for reeling or drafting of fiber composed of a single component or conjugated fiber obtained by conjugation of two or more components.

The blending proportion of both of the staple fibers of the aforementioned fiber structure according to the third mode of the invention is preferably in the range of thermal bonding conjugated staple fiber:polyester staple fiber = 5:95 to 70:30 and more preferably 10:90 to 60:40, based on weight. If the blending proportion of the thermal bonding conjugated staple fiber is too high, too many thermal anchoring points formed in the fiber structure may result in excessive hardness of the structure, while if it is too low, too few thermal anchoring points may result in inferior elasticity and durability of the structure.

The thickness of the fiber structure must be in the range of 5-100 mm. The density is in the range of 0.01-0.10 $g/cm^3$.

The process for fabricating the fiber structure may be any publicly known process so long as it allows formation of thermal anchoring points at least at some of the points of contact between the thermal bonding conjugated staple fibers and polyester staple fibers and/or points of contact between the thermal bonding conjugated staple fibers themselves.

The heat treatment temperature is preferably about 100-215°C and the heat treatment time is preferably about 10-30 minutes.

## Examples

The present invention will now be further explained by the following examples, with the understanding that the examples are not limitative on the scope of the invention.

For Reference Examples 1-21 and Comparative Examples 1-12, the limiting viscosity, color tone, metal content, nonwoven fabric strength/elongation, nonwoven fabric quality variation, generation of waste cotton during fiber opening, wadding quality variation, fiber structure hardness (elasticity), residual deformation of fiber structure with repeated compression (durability), hard masses in the fiber structure, fiber structure thickness, fiber structure density and spinneret adhesion for each of the polyester polymers were measured by the methods described below.

(1) Limiting viscosity:

Calculated after heating 0.6 g of polyester to dissolution in 50 cc of o-chlorophenol, cooling the solution and using an Ostwald viscosity tube for measurement of the solution viscosity according to an ordinary method at a temperature of 35°C.

(2) Color tone (color L value/color b value):

Measured with a CM-7500 Color Machine by Color Machines Co. after heat treatment of the particulate polymer sample in a dryer at 160°C x 90 min and recrystallization.

(3) Metal content:

For the titanium atom content and phosphorus atom content of the catalyst system as a catalyst solution, the catalyst solution was filled into a liquid cell, while for the polyester polymer, the polyester polymer sample was heated to melting on an aluminum plate and then supplied to a compression press and formed into a level molded article. The sample was supplied to a fluorescent X-ray analyzer (Model 3270 by Rigaku Corp.) for quantitative analysis of the metal content.

(4) Nonwoven fabric strength/elongation:

A constant-speed ductile tensile tester was used for measurement according to the method of JIS P8113.

(5) Nonwoven fabric quality variation:

The quality variation was based on the standard deviation per n=30 for the tensile strength of the nonwoven fabric. (A smaller value indicates lower variation and thus greater quality stability.)

(6) Generation of waste cotton during fiber opening:
The weight of waste cotton generated per hour under ordinary roller carding conditions for futon wadding production was measured in a 1 $m^2$ region around the carding machine.
(7) Wadding quality variation:
The quality variation was based on the standard deviation per n=10 for measurement of weight of waste cotton generated per hour. (A smaller value indicates lower variation and thus greater quality stability.)
(8) Fiber structure hardness (elasticity):
This was measured based on the 25% compression hardness according to JIS-K6401.
(9) Residual deformation of fiber structure with repeated compression (durability):
This was measured according to the method of JIS-K6401.
(10) Hard masses in fiber structure:
Ten specialists were randomly selected for hand contact with the surface of the fiber structure, and the condition of hard masses was organoleptically evaluated on the following scale.

5: Very satisfactory (very uniform with no discernible masses)
4: Somewhat satisfactory (mostly uniform with virtually no masses)
3: Satisfactory (partial masses but not significant)
2: Somewhat poor (discernible masses)
1: Very poor (definitely large number of masses)

(11) Fiber structure thickness:
The thickness (mm) was measured according to JISL1096.
(12) Fiber structure density:
The density (g/$cm^3$) was measured according to JISL1097.
(13) Diethylene glycol (DEG) content:
Hydrazine hydrate was used for decomposition of the polymer, and gas chromatography (Model 263-70 by Hitachi Laboratories) was used for measurement according to a common method.
(14) Adhesion layer produced on spinneret:
The polyester was prepared into chips, melted at 290°C, and then discharged from a spinneret having 12 holes each with a hole size of 0.15 mmϕ for spinning at a speed of 600 m/min for 2 days, after which the height of the adhesion layer produced on the outer rim of the discharge port of the mouthpiece was measured. A greater height of the adhesion layer tends to result in more bending of the filament current of the discharged polyester melt, and thus lowers the moldability of the polyester. That is, the height of the adhesion layer produced on the spinneret was used as an index of the moldability of the polyester.

Reference Example 1

After charging 0.009 part of tetra-n-butyl titanate into a mixture of 100 parts of dimethyl terephthalate and 70 parts of ethylene glycol in a pressure reaction-capable stainless steel reactor, pressurization was conducted at 0.07 MPa for transesterification reaction while increasing the temperature from 140°C to 240°C, and then 0.04 part of triethyl phosphonoacetate was added to terminate the transesterification reaction.

The reaction product was then transferred to a polymerization reactor, the temperature was raised to 290°C, and polycondensation reaction was conducted in a high vacuum of no greater than 26.67 Pa to obtain a (delustering agent-free) polyester with a limiting viscosity of 0.60, a diethylene glycol content of 1.5 wt% and a melting point of 254°C.

The obtained polyester was prepared into chips and dried by ordinary procedures. The dried chips were used for spinning, stretching, cutting, etc. according to ordinary methods to obtain polyester drawn yarn (size: 1.7 dtex, fiber length: 5 mm, crimps: 0) and polyester undrawn yarn as a binder (size: 1.2 dtex, fiber length: 5 mm, crimps: 0). The polyester drawn yarn and polyester undrawn yarn were mixed in a proportion of 60/40 and sheeted to a basis weight of 50 g/$m^2$ using an ordinary cylinder paper machine, and then dried with a Yankee dryer and further subjected to calender treatment. The properties of the obtained wet nonwoven fabric are shown in Table 1.

Reference Example

Titanium trimellitate synthesis method:

Tetrabutoxytitanium was added to a solution of trimellitic anhydride in ethylene glycol (0.2%) at 1/2 mole with respect to the trimellitic anhydride, and reaction was conducted for 60 minutes in air at normal pressure while maintaining a temperature of 80°C, after which the system was cooled to ordinary temperature and the produced catalyst was recrystallized with a 10-fold amount of acetone, and then the precipitate was filtered out with filter paper and dried at 100°C for 2 hours to obtain the target compound.

Reference Example 2

The same procedure was carried out as in Reference Example 1, except that 0.016 part of titanium trimellitate synthesized by the method described in the reference example was used as the titanium compound. The results are shown in Table 1.

Reference Examples 3-5, Comparative Examples 1-3

The same procedure was carried out as in Reference Example 1, except for adding the titanium compounds and phosphorus compounds listed in Table 1 in the indicated amounts. The results are shown in Table 1.

Reference Example 6

The polyester chips obtained in Reference Example 1 were used for spinning, stretching, cutting, etc. according to ordinary methods to obtain polyester drawn yarn (size: 1.7 dtex, fiber length: 51 mm, crimps: 12/inch). The polyester drawn yarn was formed into a web with a basis weight of 100 g/$m^2$ using an ordinary roller carding machine, and then a needle punch machine was used to entangle the fibers to obtain a dry nonwoven fabric. The properties thereof are shown in Table 1.

Reference Example 7

Spinning, stretching, cutting, etc. were carried out according to ordinary methods, using the polyester chips obtained in Reference Example 1 as a core component and chips consisting of a copolymer polyester comprising an acid component obtained by mixing terephthalic acid and isophthalic acid at 60/40 (mole percent) and a diol component obtained by blending ethylene glycol and 1,6-hexanediol at 85/15 (mole percent) (limiting viscosity: 0.36, softening point: 70°C), prepared using a similar catalyst, as a sheath component to obtain core-sheath conjugated polyester fiber (core/sheath ratio: 50/50, size: 2.2 dtex, fiber length: 5 mm). The core-sheath conjugated polyester fiber was blended with beaten wood pulp in a proportion of 60/40 and used for 50 g/$m^2$ web formation with an airlaid machine, and then subjected to heat treatment with an air-through dryer. The properties of the obtained airlaid nonwoven fabric are shown in Table 1.

Comparative Example 4

After charging 0.064 part by weight of calcium acetate monohydrate into a mixture of 100 parts of dimethyl terephthalate and 70 parts of ethylene glycol in a pressure reaction-capable stainless steel reactor, pressurization was conducted at 0.07 MPa for transesterification reaction while increasing the temperature from 140°C to 240°C, and then 0.044 part of a 56 wt% aqueous phosphoric acid solution was added to terminate the transesterification reaction.

The reaction product was then transferred to a polymerization reactor, diantimony trioxide was added in the amount shown in the table, the temperature was raised to 290°C, and polycondensation reaction was conducted in a high vacuum of no greater than 26.67 Pa to obtain a polyester. The obtained polyester was made into fiber and then used to obtain a nonwoven fabric, in the same manner as Reference Example 1. The results are shown in Table 1.

Table 1

| | Titanium compound | | Phosphorus compound | | Sb compound ($Sb_2O_3$) | P/Ti | Ti+P | Limiting viscosity | Color | | Nonwoven fabric properties | | | |
|---|---|---|---|---|---|---|---|---|---|---|---|---|---|---|
| | Type | Content (mmol%) | Type | Content (mmol%) | (mmol%) | | (mmol%) | | L value | b value | Method | Breaking length (km) | Elongation (%) | Variation |
| Ref. Example 1 | TBT | 5 | TEPA | 30 | - | 6 | 35 | 0.620 | 79.0 | 3.0 | wet | 0.12 | 1.5 | 0.06 |
| Ref. Example 2 | TMT | 5 | TEPA | 30 | - | 6 | 35 | 0.620 | 80.0 | 2.8 | wet | 0.13 | 1.6 | 0.04 |
| Ref. Example 3 | TMT | 5 | PEE | 30 | - | 6 | 35 | 0.620 | 78.0 | 3.0 | wet | 0.11 | 1.5 | 0.05 |
| Ref. Example 4 | TMT | 3 | TEPA | 15 | - | 5 | 18 | 0.600 | 80.0 | 2.3 | wet | 0.12 | 1.7 | 0.06 |
| Ref. Example 5 | TMT | 7 | TEPA | 50 | - | 7 | 57 | 0.600 | 80.0 | 3.3 | wet | 0.13 | 1.9 | 0.05 |
| Ref. Example 6 | TBT | 5 | TEPA | 30 | - | 6 | 35 | 0.620 | 79.0 | 3.0 | dry | 1.21 | 89.1 | 0.11 |
| Ref. Example 7 | TBT | 5 | TEPA | 30 | - | 6 | 35 | 0.620 | 79.0 | 3.0 | airlaid | 0.45 | 22.1 | 0.09 |
| Comp. Ex.1 | TMT | 5 | TEPA | 90 | - | 18 | 95 | 0.520 | 83.0 | 0.0 | wet | 0.13 | 1.9 | 0.3 |
| Comp. Ex.2 | TMT | 9 | TEPA | 100 | - | 11.1 | 109 | 0.600 | 78.0 | 3.0 | wet | 0.11 | 2.4 | 0.3 |

(continued)

| | Titanium compound | | Phosphorus compound | | Sb compound ($Sb_2O_3$) | P/Ti | Ti+P | Limiting viscosity | Color | | Nonwoven fabric properties | | | |
|---|---|---|---|---|---|---|---|---|---|---|---|---|---|---|
| | Type | Content (mmol%) | Type | Content (mmol%) | (mmol%) | | (mmol%) | | L value | b value | Method | Breaking length (km) | Elongation (%) | Variation |
| Comp. Ex.3 | TMT | 2 | TEPA | 7 | - | 3.5 | 9 | 0.600 | 80.0 | 2.0 | wet | 0.12 | 2.1 | 0.2 |
| Comp. Ex.4 | - | - | - | - | 31 | - | - | 0.620 | 78.0 | 3.0 | wet | 0.13 | 2.3 | 0.3 |

TBT: tetra-n-butoxytitanium
TMT: titanium trimellitate
TEPA: triethyl phosphonoacetate
PEE: carboethoxymethane-phosphonic acid diethyl ester

Reference Example 8

The same polyethylene terephthalate chips as in Reference Example 1 were dried. The dried chips were used for spinning, stretching, cutting, etc. according to ordinary methods to obtain polyester drawn yarn (size: 6.6 dtex, fiber length: 51 mm, coiled three-dimensional crimps: 9.0/25 mm). The polyester drawn yarn was opened with an ordinary roller carding machine and formed into a futon card web. The waste cotton generated is shown in Table 2.

Reference Example 9

The same procedure was carried out as in Reference Example 8, except that 0.016 part of titanium trimellitate synthesized by the method described in the reference example was used as the titanium compound. The results are shown in Table 2.

Reference Examples 10-14, Comparative Examples 5-7

The same procedure was carried out as in Reference Example 8, except for adding the titanium compounds and phosphorus compounds listed in Table 2 in the indicated amounts. The results are shown in Table 2.

Comparative Example 8

After charging 0.064 part by weight of calcium acetate monohydrate into a mixture of 100 parts of dimethyl terephthalate and 70 parts of ethylene glycol in a pressure reaction-capable stainless steel reactor, pressurization was conducted at 0.07 MPa for transesterification reaction while increasing the temperature from 140°C to 290°C, and then 0.044 part of a 56 wt% aqueous phosphoric acid solution was added to terminate the transesterification reaction.

The reaction product was then transferred to a polymerization reactor, diantimony trioxide was added in the amount shown in the table, the temperature was raised to 290°C, and polycondensation reaction was conducted in a high vacuum of no greater than 26.67 Pa to obtain a polyester. The obtained polyester was made into fiber and then used to obtain wadding, in the same manner as Reference Example 8. The results are shown in Table 2.

Table 2

| | Titanium compound | | Phosphorus compound | | Sb compound ($Sb_2O_3$) | P/Ti | Ti+P | Limiting viscosity | Color | | Filament properties | | Wadding processing properties | |
|---|---|---|---|---|---|---|---|---|---|---|---|---|---|---|
| | Type | Content (mmol%) | Type | Content (nmol%) | (mmol%) | | (mmol%) | | L value | b value | Strength CN/dtex | Elongation % | Mean waste cotton (g) | Quality variation |
| Ref. Example 8 | TBT | 5 | TEPA | 30 | - | 6 | 35 | 0.620 | 79.0 | 3.0 | 3.7 | 27 | 8 | 0.07 |
| Ref. Example 9 | TMT | 5 | TEPA | 30 | - | 6 | 35 | 0.620 | 80.0 | 2.8 | 3.8 | 26 | 11 | 0.06 |
| Ref. Example 10 | TMT | 5 | PEE | 30 | - | 6 | 35 | 0.620 | 78.0 | 3.0 | 3.6 | 28 | 12 | 0.06 |
| Ref. Example 11 | TMT | 3 | TEPA | 15 | - | 5 | 18 | 0.600 | 80.0 | 2.3 | 3.7 | 27 | 6 | 0.03 |
| Ref. Example 12 | TMT | 7 | TEPA | 50 | - | 7 | 57 | 0.600 | 80.0 | 3.3 | 3.6 | 25 | 11 | 0.12 |
| Ref. Example 13 | TMT | 5 | TMP | 30 | - | 6 | 35 | 0.600 | 77.0 | 4.0 | 3.6 | 26 | 9 | 0.11 |
| Ref. Example 14 | titanium acetate | 5 | TEPA | 30 | - | 6 | 35 | 0.600 | 78.0 | 4.5 | 3.6 | 29 | 13 | 0.10 |
| Comp. Ex. 5 | TMT | 5 | TEPA | 90 | - | 18 | 95 | 0.520 | 83.0 | 0.0 | 3.2 | 22 | 12 | 0.18 |
| Comp. Ex. 6 | TMT | 9 | TEPA | 100 | - | 11.1 | 109 | 0.600 | 78.0 | 3.0 | 3.7 | 29 | 11 | 0.26 |

(continued)

| | Titanium compound | | Phosphorus compound | | Sb compound ($Sb_2O_3$) | P/Ti | Ti+P | Limiting viscosity | Color | | Filament properties | | Wadding processing properties | |
|---|---|---|---|---|---|---|---|---|---|---|---|---|---|---|
| | Type | Content (mmol%) | Type | Content (nmol%) | (mmol%) | | (mmol%) | | L value | b value | Strength CN/dtex | Elongation % | Mean waste cotton (g) | Quality variation |
| Comp. Ex. 7 | TMT | 2 | TEPA | 7 | - | 3.5 | 9 | 0.600 | 80.0 | 2.0 | 3.6 | 27 | 15 | 0.22 |
| Comp. Ex. 8 | - | - | - | - | 31 | - | - | 0.620 | 78.0 | 3.0 | 3.9 | 28 | 55 | 0.42 |

TBT: tetra-n-butoxytitanium
TMT: titanium trimellitate
TEPA: triethyl phosphonoacetate
PEE: carboethoxymethane-phosphonic acid diethyl ester
TMP: trimethyl phosphate

Reference Example 15

The same polyethylene terephthalate chips as in Reference Example 1 were dried and used to obtain polyester staple fibers with a single fiber size of 12 dtex, 8 crimps/25 mm and a crimping ratio of 30% by an established method. The same chips were also used as the core component, while the same catalyst was used for polymerization of a mixed acid component comprising terephthalic acid and isophthalic acid at 80/20 (mole percent) and butylene glycol, and the obtained polybutylene-based terephthalate was further subjected to heated reaction at 38 wt% with 62 wt% of polybutylene glycol (molecular weight: 2000), to obtain a block copolymer polyether-ester elastomer (thermoplastic elastomer) with a limiting viscosity of 1.0 and a melting point of 155°C. The obtained thermoplastic elastomer was used as the sheath component, and spinning, stretching, cutting, etc. were carried out for a fiber cross-sectional area core/sheath ratio of 60/40, to obtain a thermal bonding conjugated staple fiber (core/sheath ratio: 60/40, fiber size: 6 dtex, 11 crimps/25 mm, crimping ratio: 8%).

The polyester staple fiber and thermal bonding conjugated staple fiber were mixed in a weight proportion of 70:30 and passed twice through a roller carding machine to obtain a blended web. The web was placed in a molding frame at a fixed density and subjected to heat treatment at 180°C x 15 min using a circulating hot air dryer to obtain a fiber structure with a density of 0.04 g/cm$^3$ and a thickness of 5 cm. The properties of the obtained fiber structure were evaluated and the results are shown in Table 3.

Reference Example 16

The same procedure was carried out as in Reference Example 15 to obtain a fiber structure, except that 0.016 part of titanium trimellitate synthesized by the methods described in the reference example was used as the titanium compound. The results are shown in Table 3.

Reference Examples 17-21, Comparative Examples 9-11

The same procedure was carried out as in Reference Example 15 to obtain a fiber structure, except for adding the titanium compounds and phosphorus compounds listed in Table 3 in the indicated amounts. The results are shown in Table 3.

Comparative Example 12

After charging 0.064 part by weight of calcium acetate monohydrate into a mixture of 100 parts of dimethyl terephthalate and 70 parts of ethylene glycol in a pressure reaction-capable stainless steel reactor, pressurization was conducted at 0.07 MPa for transesterification reaction while increasing the temperature from 140°C to 240°C, and then 0.044 part of a 56 wt% aqueous phosphoric acid solution was added to terminate the transesterification reaction.

The reaction product was then transferred to a polymerization reactor, diantimony trioxide was added in the amount shown in the table, the temperature was raised to 290°C, and polycondensation reaction was conducted in a high vacuum of no greater than 26.67 Pa to obtain a polyester. The obtained polyester was made into fiber and then used to obtain a fiber structure, in the same manner as Reference Reference Example 15. The results are shown in Table 3.

Table 3

| | Titanium compound | | Phosphorus compound | | Sb compound $Sb_2O_3$ | P/Ti | Ti+P | Limiting viscoisity | Color | | Filament properties | | Fiber structure quality | | |
|---|---|---|---|---|---|---|---|---|---|---|---|---|---|---|---|
| | Type | Content mmol% | Type | Content mmol% | mmol% | | mmol% | | L value | b value | Strength CN/dtex | Elonga-tion % | Hardness N | Residual deformation with repeated compression % | Hard masses |
| Ref. Example 15 | TBT | 5 | TEPA | 30 | - | 6 | 35 | 0.620 | 79.0 | 3.0 | 3.7 | 27 | 370 | 8.8 | 5 |
| Ref. Example 16 | TMT | 5 | TEPA | 30 | - | 6 | 35 | 0.620 | 80.0 | 2.8 | 3.8 | 26 | 380 | 7.1 | 5 |
| Ref. Example 17 | TMT | 5 | PEE | 30 | - | 6 | 35 | 0.620 | 78.0 | 3.0 | 3.8 | 28 | 385 | 8.4 | 5 |
| Ref. Example 18 | TMT | 3 | TEPA | 15 | - | 5 | 18 | 0.600 | 80.0 | 2.3 | 3.6 | 27 | 360 | 10.2 | 5 |
| Ref. Example 19 | TMT | 7 | TEPA | 50 | - | 7 | 57 | 0.600 | 80.0 | 3.3 | 3.7 | 25 | 374 | 9.3 | 5 |
| Ref. Example 20 | TMT | 5 | TMP | 30 | - | 6 | 35 | 0.600 | 77.0 | 4.0 | 3.6 | 26 | 363 | 11.3 | 5 |
| Ref. Example 21 | acetate titanium | 5 | TEPA | 30 | - | 6 | 35 | 0.600 | 78.0 | 4.5 | 3.6 | 29 | 360 | 10.9 | 5 |
| Comp.Ex. 9 | TMT | 5 | TEPA | 90 | - | 18 | 95 | 0.520 | 83.0 | 0.0 | 3.2 | 2.2 | 340 | 14.0 | 2 |

(continued)

| | Titanium compound | | Phosphorus compound | | Sb compound $Sb_2O_3$ | P/Ti | Ti+P | Limiting viscoisity | Color | | Filament properties | | Fiber structure quality | | |
|---|---|---|---|---|---|---|---|---|---|---|---|---|---|---|---|
| | Type | Content mmol% | Type | Content mmol% | mmol% | | mmol% | | L value | b value | Strength CN/dtex | Elonga-tion % | Hardness N | Residual deformation with repeated compression % | Hard masses |
| Comp:Ex. 10 | TMT | 9 | TEPA | 100 | - | 11.1 | 109 | 0.600 | 78.0 | 3.0 | 3.7 | 29 | 378 | 9.0 | 3 |
| Comp.Ex. 11 | TMT | 2 | TEPA | 7 | - | 3.5 | 9 | 0.600 | 80.0 | 2.0 | 3.6 | 27 | 358 | 11.0 | 3 |
| Comp.Ex. 12 | - | - | - | - | 31 | - | - | 0.620 | 78.0 | 3.0 | 3.9 | 28 | 415 | 7.0 | 3 |

TBT: tetra-n-butoxytitanium, TMT: titanium trimellitate, TEPA: triethyl phosphonoacetate, PEE: carboethoxymethane-phosphonic acid diethyl ester, TMP: trimethyl phosphate

For Examples 22-36 of which Examples 22-31 are reference examples and Comparative Examples 13-23, the limiting viscosity, color tone, metal content, nonwoven fabric strength/elongation, nonwoven fabric quality variation, generation of waste cotton during fiber opening, wadding quality variation, fiber structure hardness (elasticity), residual deformation of fiber structure with repeated compression (durability), hard masses in the fiber structure, fiber structure thickness, fiber structure density and spinneret adhesion for each of the polyester polymers were measured by the methods described below.

(1) Limiting viscosity:
Calculated after heating 0.6 g of polyester to dissolution in 50 cc of o-chlorophenol, cooling the solution and using an Ostwald viscosity tube for measurement of the solution viscosity according to an ordinary method at a temperature of 35°C.
(2) Color tone (color L value/color b value):
Measured with a CM-7500 Color Machine by Color Machines Co. after heat treatment of the particulate polymer sample in a dryer at 160°C x 90 min and recrystallization.
(3) Analysis of metal contents:
The titanium and phosphorus atom concentrations of the reaction precipitated catalyst were quantitatively analyzed by setting the dried sample in a scanning electron microscope (SEM, S570 by Hitachi Instruments Service) and using an energy dispersive X-ray microanalyzer (XMA, EMAX-7000 by Horiba Co., Ltd.) connected to it.
The catalyst metal concentration in the polyester was quantitatively analyzed by heating the particulate sample to melting on an aluminum plate and then forming a level molded article thereof with a compression press and using a fluorescent X-ray analyzer (Model 3270 by Rigaku Corp.).
(4) Nonwoven fabric strength/elongation:

A constant-speed ductile tensile tester was used for measurement according to the method of JIS P8113.

(5) Nonwoven fabric quality variation:
The quality variation was based on the standard deviation per n=30 for the tensile strength of the nonwoven fabric. (A smaller value indicates lower variation and thus greater quality stability.)
(6) Generation of waste cotton during fiber opening:
The weight of waste cotton generated per hour under ordinary roller carding conditions for futon wadding production was measured in a 1 $m^2$ region around the carding machine.
(7) Wadding quality variation:
The quality variation was based on the standard deviation per n=10 for measurement of weight of waste cotton generated per hour. (A smaller value indicates lower variation and thus greater quality stability.)
(8) Fiber structure hardness (elasticity):
This was measured based on the 25% compression hardness according to JIS-K6401.
(9) Residual deformation of fiber structure with repeated compression (durability):
This was measured according to the method of JIS-K6401.
(10) Hard masses in fiber structure:
Ten specialists were randomly selected for hand contact with the surface of the fiber structure, and the condition of hard masses was organoleptically evaluated on the following scale.

5: Very satisfactory (very uniform with no discernible masses)
4: Somewhat satisfactory (mostly uniform with virtually no masses)
3: Satisfactory (partial masses but not significant)
2: Somewhat poor (discernible masses)
1: Very poor (definitely large number of masses)

(11) Fiber structure thickness:
The thickness (mm) was measured according to JISL1096.
(12) Fiber structure density:
The density (g/$cm^3$) was measured according to JISL1097.
(13) Adhesion layer produced on spinneret:
The polyester was prepared into chips, melted at 290°C, and then discharged from a spinneret having 12 holes each with a hole size of 0.15 mmϕ for spinning at a speed of 600 m/min for 2 days, after which the height of the adhesion layer produced on the outer rim of the discharge port of the mouthpiece was measured. A greater height of the adhesion layer tends to result in more bending of the filament current of the discharged polyester melt, and thus lowers the moldability of the polyester. That is, the height of the adhesion layer produced on the spinneret was

used as an index of the moldability of the polyester.

Reference Example 22

Preparation of titanium compound:

A 2 L three-necked flask equipped with a function allowing mixing and stirring of the contents was prepared, 919 g of ethylene glycol and 10 g of acetic acid were placed therein, and after stirring and mixing, 71 g of titanium tetrabutoxide was slowly added to obtain a (transparent) solution of a titanium compound in ethylene glycol. This solution will hereinafter be abbreviated as "TB solution". The titanium atom concentration of the solution was 1.02%.

Preparation of phosphorus compound:

A 2 L three-necked flask equipped with a function allowing heating, mixing and stirring of the contents was' prepared, and 656 g of ethylene glycol was placed therein and heated to 100°C while stirring. Upon reaching 100°C, 34.5 g of monolauryl phosphate was added, and the mixture was heated, mixed and stirred to dissolution to obtain a transparent solution. This solution will hereinafter be abbreviated as "P1 solution".

Preparation of catalyst:

Next, 310 g of the prepared TB solution was slowly added to the P1 solution (approximately 690 g) under heating control at 100°C and stirring, and upon addition of the entire amount, stirring was continued for 1 hour at a temperature of 100°C to complete reaction of the titanium compound and phosphorus compound. The mixing ratio of the TB solution and P1 solution was 2.0 as the molar ratio of phosphorus atoms with respect to titanium atoms. The product obtained by the reaction was insoluble in ethylene glycol and was therefore present as a turbid, fine precipitate. This solution will hereinafter be abbreviated as "TP1-2.0 catalyst".

In order to analyze the obtained reaction precipitate, a portion of the reaction solution was filtered with a 5 μ pore filter to obtain the precipitated reaction product as a solid, and it was then washed with water and dried. The elemental concentration of the obtained precipitated reaction product was analyzed by XMA, yielding results of 12.0% titanium, 16.4% phosphorus and a phosphorus atom molar ratio of 2.1 with respect to titanium atoms. Solid NMR analysis yielded the following results. C-13 CP/MAS (75.5 Hz frequency) measurement revealed disappearance the butoxide-derived chemical shift peaks at 14 ppm, 20 ppm and 36 ppm for titanium tetrabutoxide, while P-31 DD/MAS (121.5 Hz frequency) measurement confirmed a new chemical shift peak at 22 ppm not found in conventional monolauryl phosphate. These data clearly indicated that the precipitate obtained under these conditions was a new compound resulting from reaction of the titanium compound and phosphorus compound.

Separately, a slurry prepared by mixing 179 parts of high purity terephthalic acid and 95 parts of ethylene glycol was supplied at a constant rate to a reactor already holding 225 parts of an oligomer (oligomer of an ethylene glycol terephthalate diester) while stirring in a nitrogen atmosphere under conditions kept at 255°C, ordinary pressure, and esterification reaction was carried out for 4 hours to completion while removing out of the system the water and ethylene glycol generated by the reaction. The esterification rate was >98% and the polymerization degree of the produced oligomer was about 5-7.

After transferring 225 parts of the oligomer obtained by the esterification reaction to a polycondensation reactor, 3.34 parts of the "TP1-2.0 catalyst" produced earlier was charged in as the polycondensation catalyst. The reaction temperature in the system was raised from 255°C to 280°C and the reaction pressure lowered from atmospheric pressure to 60 Pa in stages, for polycondensation reaction while removing out of the system the water and ethylene glycol generated by the reaction.

The extent of the polycondensation reaction was confirmed while monitoring the load on the stirring blade in the system, and the reaction was suspended when the desired degree of polymerization was reached. The reaction product in the system was then continuously extruded into a strand from the discharge port and then cooled and cut to obtain granular pellets of approximately 3 mm. The quality of the obtained polyethylene terephthalate is shown in Table 4.

The chips were dried and used for spinning, stretching, cutting, etc. according to ordinary methods to obtain polyester drawn yarn (size: 1.7 dtex, fiber length: 5 mm, crimps: 0) and polyester undrawn yarn as a binder (size: 1.2 dtex, fiber length: 5 mm, crimps: 0). The polyester drawn yarn and polyester undrawn yarn were mixed in a proportion of 60/40 and sheeted to a basis weight of 50 g/m$^2$ using an ordinary cylinder paper machine, and then dried with a Yankee dryer and further subjected to calender treatment. The properties of the obtained wet nonwoven fabric are shown in Table 4.

Reference Example 23

The same procedure was carried out as in Reference Example 22, except that monobutyl phosphate was used instead of monolauryl phosphate. The addition amount and conditions were also changed in the following manner.

After heating and dissolving 28.3 g of monobutyl phosphate in 537 g of ethylene glycol (hereinafter abbreviated as "P2 solution"), 435 g of TB solution was placed therein and a reaction product was obtained. The mixing ratio of the TB solution and P2 solution was 2.0 as the molar ratio of phosphorus atoms with respect to titanium atoms. This solution will hereinafter be abbreviated as "TP2-2.0 catalyst". The heating temperature was 70°C and the reaction time was 1 hour.

In order to analyze the obtained reaction precipitate, a portion of the reaction solution was filtered with a 5 μ pore filter to obtain the precipitated reaction products as a solid, and it was then washed with water and dried. The elemental concentration of the obtained precipitated reaction product was analyzed in the same manner as above, yielding results of 17.0% titanium, 21.2% phosphorus and a phosphorus atom molar ratio of 1.9 with respect to titanium atoms. The catalyst was used for production of polyester fiber in the same manner as Reference Example 1, after which sheeting and drying were carried out to obtain a wet nonwoven fabric. The results are shown in Table 4.

Reference Example 24

The same procedure was carried out as in Reference Example 22, except that the amount of TP1 solution prepared and the amount of TB solution added were changed. The amounts prepared and added were as follows.

After heating and dissolving 31.3 g of monolauryl phosphate in 594 g of ethylene glycol (hereinafter abbreviated as "P3 solution"), 375 g of TB solution was placed therein and a reaction product was obtained. The mixing ratio of the TB solution and P3 solution was 1.5 as the molar ratio of phosphorus atoms with respect to titanium atoms. This solution will hereinafter be abbreviated as "TP3-1.5 catalyst". The catalyst was used for production of polyester fiber in the same manner as Reference Example 22, after which sheeting and drying were carried out to obtain a wet nonwoven fabric. The results are shown in Table 4.

Reference Example 25

The same procedure was carried out as in Reference Example 23, except that the amount of TP2 solution prepared and the amount of TB solution added were changed. The amounts prepared and added were as follows.

After heating and dissolving 33.0 g of monobutyl phosphate in 627 g of ethylene glycol (hereinafter abbreviated as "P4 solution"), 340 g of TB solution was placed therein and a reaction product was obtained. The mixing ratio of the TB solution and P4 solution was 3.0 as the molar ratio of phosphorus atoms with respect to titanium atoms. This solution will hereinafter be abbreviated as "TP4-3.0 catalyst". The catalyst was used for production of polyester fiber in the same manner as Reference Example 22, after which sheeting and drying were carried out to obtain a wet nonwoven fabric. The results are shown in Table 4.

Reference Example 26

The polyester chips obtained in Reference Example 22 were used for spinning, stretching, cutting, etc. according to ordinary methods to obtain polyester drawn yarn (size: 1.7 dtex, fiber length: 51 mm, crimps: 12/inch). The polyester drawn yarn was formed into a web with a basis weight of 100 $g/m^2$ using an ordinary roller carding machine, and then a needle punch machine was used to entangle the fibers to obtain a dry nonwoven fabric. The properties thereof are shown in Table 4.

Reference Example 27

Spinning, stretching, cutting, etc. were carried out according to ordinary methods, using the polyester chips obtained in Example 22 as a core component and chips consisting of a copolymer polyester comprising an acid component obtained by mixing terephthalic acid and isophthalic acid at 60/40 (mole percent) and a diol component obtained by mixing ethylene glycol and 1,6-hexanediol at 85/15 (mole percent) (limiting viscosity: 0.36, softening point: 70°C), prepared using a similar catalyst, as a sheath component to obtain core-sheath conjugated polyester fiber (core/sheath ratio: 50/50, size: 2.2 dtex, fiber length: 5 mm). The core-sheath conjugated polyester fiber was blended with beaten wood pulp in a proportion of 60/40 and used for 50 $g/m^2$ web formation with an airlaid machine, and then subjected to heat treatment with an air-through dryer. The properties of the obtained airlaid nonwoven fabric are shown in Table 4.

Comparative Example 13

The same procedure was carried out as in Reference Example 22, except that the polycondensation catalyst was changed to a 1.3% solution of antimony trioxide in ethylene glycol, the charged amount was 4.83 parts, and there was further charged 0.121 part of a 25% solution of trimethyl phosphate in ethylene glycol as a stabilizer. The results are shown in Table 4.

Comparative Example 14

The same procedure was carried out as in Reference Example 22, except that the TB solution prepared in Reference Example 1 alone was used as the polycondensation catalyst, and the changed amount was 1.03 parts. The polycondensation reaction time was 95 minutes. The results are shown in Table 4.

Comparative Example 15

The same procedure was carried out as in Reference Example 22. except that for the polycondensation catalyst, 1.03 parts of the TB solution and 2.30 parts of the P1 solution were each separately charged into the polycondensation reaction system during production of the polyester, without reacting the TB solution and P1 solution. The results are shown in Table 4.

Comparative Example 16

The same procedure was carried out as in Reference Example 23, except that for the polycondensation catalyst, 1.03 parts of the TB solution and 2.3 parts of the P2 solution were each separately charged into the polycondensation reaction system during production of the polyester, without reacting the TB solution and P2 solution. The results are shown in Table 4.

Table 4

| | Polymer quality | | | | | Nonwoven fabric properties | | | |
|---|---|---|---|---|---|---|---|---|---|
| | Catalyst | Catalyst content | Molar ratio of P atoms to Ti atoms | Limiting viscosity | Color | Method | Breaking length (longitudinal) | Elongation (longitudinal) | Quality variation |
| | | Ti(ppm)/P (ppm) | | | L value/ b value | | (Km) | (%) | |
| Ref. Example 22 | TP1-2.0 | 52/64 | 2.0 | 0.64 | 81/2.0 | wet | 0.12 | 1.5 | 0.06 |
| Ref. Example 23 | TP2-2.0 | 48/60 | 2.0 | 0.64 | 81/2.2 | wet | 0.13 | 1.6 | 0.03 |
| Ref. Example 24 | TP3-1.5 | 32/28 | 1.5 | 0.64 | 81/3.0 | wet | 0.11 | 1.5 | 0.05 |
| Ref. Example 25 | TP4-3.0 | 152/260 | 3.0 | 0.64 | 81/2.4 | wet | 0.14 | 1.7 | 0.05 |
| Ref. Example 26 | TP1-2.0 | 52/64 | 2.0 | 0.64 | 81/2.0 | dry | 1.21 | 89.1 | 0.11 |
| Ref. Example 27 | TP1-2.0 | 52/64 | 2.0 | 0.64 | 81/2.0 | airlaid | 0.43 | 22.1 | 0.09 |
| Comp.Ex.13 | $Sb_2O_3$ | 250(Sb) | - | 0.64 | 75/2.5 | wet | 0.11 | 2.4 | 0.3 |
| Comp.Ex.14 | TB solution | 52/- | - | 0.64 | 81/8.0 | wet | 0.12 | 2.1 | 0.2 |
| Comp.Ex.15 | TB+P1 solution | 52/56 | - | 0.64 | 81/7.6 | wet | 0.14 | 2.5 | 0.13 |
| Comp.Ex.16 | TB+P2 solution | 52/56 | - | 0.64 | 81/7.9 | wet | 0.13 | 1.9 | 0.13 |

Reference Examples 28

The same polyethylene terephthalate chips as in Reference Example 22 were dried and used for spinning, stretching, cutting, etc. according to ordinary methods to obtain polyester drawn yarn (size: 6.6 dtex, fiber length: 51 mm, coiled three-dimensional crimps : 9.0/25 mm). The polyester drawn yarn was opened with an ordinary roller carding machine and formed into a futon card web. The waste cotton generated is shown in Table 5.

Reference Example 29

The same procedure was carried out as in Reference Example 28, except that monobutyl phosphate was used instead of monolauryl phosphate. The addition amount and conditions were also changed in the following manner.

After heating and dissolving 28.3 g of monobutyl phosphate in 537 g of ethylene glycol (hereinafter abbreviated as "P2 solution"), 435g of TB solution was placed therein and a reaction product was obtained. The mixing ratio of the TB solution and P2 solution was 2.0 as the molar ratio of phosphorus atoms with respect to titanium atoms. This solution will hereinafter be abbreviated as "TP2-2.0 catalyst". The heating temperature was 70°C and the reaction time was 1 hour.

In order to analyze the obtained reaction precipitate, a portion of the reaction solution was filtered with a 5 μ pore filter to obtain the precipitated reaction product as a solid, and it was then washed with water and dried. The elemental concentration of the obtained precipitated reaction product was analyzed in the same manner as above, yielding results of 17.0% titanium, 21.2% phosphorus and a phosphorus atom molar ratio of 1.9 with respect to titanium atoms. The catalyst was used for production of polyester fiber in the same manner as Reference Example 7, after which the fibers were opened with an ordinary roller carding machine and formed into a futon card web. The results are shown in Table 5.

Reference Example 30

The same procedure was carried out as in Reference Example 28, except that the amount of TP1 solution prepared and the amount of TB solution added were changed. The amounts prepared and added were as follows.

After heating and dissolving 31.3 g of monolauryl phosphate in 594 g of ethylene glycol (hereinafter abbreviated as "P3 solution"), 375 g of TB solution was placed therein and a reaction product was obtained. The mixing ratio of the TB solution and P3 solution was 1.5 as the molar ratio of phosphorus atoms with respect to titanium atoms. This solution will hereinafter be abbreviated as "TP3-1.5 catalyst". The catalyst was used for production of polyester fiber in the same manner as Reference Example 1, after which the fibers were opened with an ordinary roller carding machine and formed into a futon card web. The results are shown in Table 5.

Reference Example 31

The same procedure was carried out as in Reference Example 29, except that the amount of TP2 solution prepared and the amount of TB solution added were changed. The amounts prepared and added were as follows.

After heating and dissolving 33.0 g of monobutyl phosphate in 627 g of ethylene glycol (hereinafter abbreviated as "P4 solution"), 340 g of TB solution was placed therein and a reaction product was obtained. The mixing ratio of the TB solution and P4 solution was 3.0 as the molar ratio of phosphorus atoms with respect to titanium atoms. This solution will hereinafter be abbreviated as "TP4-3.0 catalyst". The catalyst was used for production of polyester fiber in the same manner as Reference Example 1, after which the fibers were opened with an ordinary roller carding machine and formed into a futon card web. The results are shown in Table 5.

Comparative Example 17

The same procedure was carried out as in Reference Example 28, except that the polycondensation catalyst was changed to a 1.3% solution of antimony trioxide in ethylene glycol, the charged amount was 4.83 parts, and there was further charged 0.121 part of a 25% solution of trimethyl phosphate in ethylene glycol as a stabilizer. The results are shown in Table 5.

Comparative Example 18

The same procedure was carried out as in Reference Example 28, except that the TB solution prepared in Reference Example 7 alone was used as the polycondensation catalyst, and the charged amount ways 1.03 parts. The polycondensation reaction time was 95 minutes. The results are shown in Table 5.

Comparative Example 19

The same procedure was carried out as in Reference Example 28, except that for the polycondensation catalyst, 1.03 parts of the TB solution and 2.30 parts of the P1 solution were each separately charged into the polycondensation reaction system during production of the polyester, without reacting the TB solution and P1 solution. The results are shown in Table 5.

Comparative Example 20

The same procedure was carried out as in Reference Example 29, except that for the polycondensation catalyst, 1.03 parts of the TB solution and 2.3 parts of the P2 solution were each separately charged into the polycondensation reaction system during production of the polyester, without reacting the TB solution and P2 solution. The results are shown in Table 5.

Table 5

| | Polymer quality | | | | | wadding processing properties | |
|---|---|---|---|---|---|---|---|
| | Catalyst | Catalyst content | Molar ratio of P atoms to Ti atoms | Limiting viscosity | Color | Mean waste cotton | Quality variation |
| | | Ti(ppm)/P (ppm) | | | L value/b value | (g/H) | |
| Ref. Example 28 | TP1-2.0 | 52/64 | 2.0 | 0.64 | 81/2.0 | 11 | 0.06 |
| Ref. Example 29 | TP2-2.0 | 48/60 | 2.0 | 0.64 | 81/2.2 | 6 | 0.03 |
| Ref. Example 30 | TP3-1.5 | 32/28 | 1.5 | 0.64 | 81/3.0 | 9 | 0.05 |
| Ref. Example 31 | TP4-3.0 | 152/260 | 3.0 | 0.64 | 81/2.4 | 10 | 0.05 |
| Ref. Comp.Ex. 17 | $Sb_2O_3$ | 250(Sb) | - | 0.64 | 75/2.5 | 28 | 0.3 |
| Comp.Ex. 18 | TB solution | 52/- | - | 0.64 | 81/8.0 | 25 | 0.2 |
| Comp.Ex. 19 | TB+P1 solution | 32/56 | - | 0.64 | 81/7.6 | 18 | 0.13 |
| Comp.Ex. 20 | TB+P2 solution | 52/5.6 | - | 0.64 | 81/7.9 | 19 | 0.13 |

Example 32

The same polyethylene terephthalate chips as in Reference Example 22 were dried and used to obtain polyester staple fibers with a single fiber size of 12 dtex, 8 crimps/25 mm and a crimping ratio of 30% by an ordinary method. The same chips were also used as the core component, while the same catalyst was used for polymerization of a mixed acid component comprising terephthalic acid and isophthalic acid at 80/20 (mole percent) and butylene glycol, and the obtained polybutylene-based terephthalate was further subjected to heated reaction at 38 wt% with 62 wt% of polybutylene glycol (molecular weight: 2000), to obtain a block copolymer polyether-ester elastomer (thermoplastic elastomer) with a limiting viscosity of 1.0 and a melting point of 155°C, which was used as the sheath component. Spinning, stretching, cutting, etc. were carried out for a fiber cross-sectional area core/sheath ratio of 60/40, to obtain a core-sheath conjugate polyester fiber (core/sheath ratio: 60/40, fiber size: 6 dtex, 11 crimps/25 mm, crimping ratio: 8%).

The polyester staple fiber and thermal bonding conjugated polyester staple fiber were mixed in a weight proportion of 70:30 and passed twice through a roller carding machine to obtain a blended web. The web was placed in a molding frame at a fixed density and subjected to heat treatment at 180°C x 15 min using a circulating hot air dryer to obtain a fiber structure with a density of 0.04 g/$cm^3$ and a thickness of 5 cm. The properties of the obtained fiber structure were evaluated and the results are shown in Table 6.

Example 33

The same procedure was carried out as in Example 32, except that monobutyl phosphate was used instead of monolauryl phosphate. The addition amount and conditions were also changed in the following manner.

After heating and dissolving 28.3 g of monobutyl phosphate in 537 g of ethylene glycol (hereinafter abbreviated as "P2 solution"), 435 g of TB solution was placed therein and a reaction product was obtained. The mixing ratio of the TB solution and P2 solution was 2.0 as the molar ratio of phosphorus atoms with respect to titanium atoms. This solution will hereinafter be abbreviated as "TP2-2.0 catalyst". The heating temperature was 70°C and the reaction time was 1 hour.

In order to analyze the obtained reaction precipitate, a portion of the reaction solution was filtered with a 5 μ pore filter to obtain the precipitated reaction product as a solid, and it was then washed with water and dried. The elemental concentration of the obtained precipitated reaction product was analyzed in the same manner as above, yielding results of 17.0% titanium, 21.2% phosphorus and a phosphorus atom molar ratio of 1.9 with respect to titanium atoms. The catalyst was used for production of polyester fiber in the same manner as Reference Example 11, after which web formation, heat treatment, etc. were carried out to obtain a fiber structure. The results are shown in Table 6.

Example 34

The same procedure was carried out as in Example 32, except that the amount of TP1 solution prepared and the amount of TB solution added were changed. The amounts prepared and added were as follows.

After heating and dissolving 31.3 g of monolauryl phosphate in 594 g of ethylene glycol (hereinafter abbreviated as "P3 solution"), 375 g of TB solution was placed therein and a reaction product was obtained. The mixing ratio of the TB solution and P3 solution was 1.5 as the molar ratio of phosphorus atoms with respect to titanium atoms. This solution will hereinafter be abbreviated as "TP3-1.5 catalyst". The catalyst was used for production of polyester fiber in the same manner as Reference Example 1, after which web formation, heat treatment, etc. were carried out to obtain a fiber structure. The results are shown in Table 6.

Example 35

The same procedure was carried out as in Example 33, except that the amount of TP2 solution prepared and the amount of TB solution added were changed. The amounts prepared and added were as follows.

After heating and dissolving 33.0 g of monobutyl phosphate in 627 g of ethylene glycol (hereinafter abbreviated as "P4 solution"), 340 g of TB solution was placed therein and a reaction product was obtained. The mixing ratio of the TB solution and P4 solution was 3.0 as the molar ratio of phosphorus atoms with respect to titanium atoms. This solution will hereinafter be abbreviated as "TP4-3.0 catalyst". The catalyst was used for production of polyester fiber in the same manner as Example 11, after which web formation, heat treatment etc. were carried out to obtain a fiber structure. The results are shown in Table 6.

Example 36

Spinning, stretching, cutting, etc. were carried out according to ordinary methods, using chips obtained by addition copolymerization of isophthalic acid and 1,6-hexanediol with the same catalyst used for the polyester chips obtained in Example 32, to obtain core-sheath conjugated polyester fiber (core/sheath ratio: 50/50, size: 4.4 dtex, fiber length: 51 mm). The procedure of Example 11 was otherwise followed to produce polyester staple fiber, after which web formation, heat treatment etc. were carried out to obtain a fiber structure. The heat treatment temperature, however, was 150°C. The results are shown in Table 6.

Comparative Example 21

The same procedure was carried out as in Example 32, except that the polycondensation catalyst was changed to a 1.3% solution of antimony trioxide in ethylene glycol, the charged amount was 4.83 parts, and there was further charged 0.121 part of a 25% solution of trimethyl phosphate in ethylene glycol as a stabilizer. The results are shown in Table 6.

Comparative Example 22

The same procedure was carried out as in Example 32, except that the TB solution prepared in Reference Example 1 alone was used as the polycondensation catalyst, and the charged amount was 1.03 parts. The polycondensation reaction time was 95 minutes. The results are shown in Table 6.

Comparative Example 23

The same procedure was carried out as in Example 32, except that for the polycondensation catalyst, 1.03 parts of the TB solution and 2.30 parts of the P1 solution were each separately charged into the polycondensation reaction system during production of the polyester, without reacting the TB solution and P1 solution. The results are shown in Table 6.

Table 6

| | Polymer quality | | | | | Fiber structure quality | | |
|---|---|---|---|---|---|---|---|---|
| | Catalyst | Catalyst content | Molar ratio of P atoms to Ti atoms | Limiting viscosity | Color | Hardness | Residual deformation with repeated compression | Hard masses |
| | | Ti(ppm) /P(ppm) | | | L value/ b value | N | % | Level |
| Example 32 | TF1-2.0 | 52/64 | 2.0 | 0.64 | 81/2.0 | 361 | 7.1 | 5 |
| Example 33 | TP2-2.0 | 48/60 | 2.0 | 0.64 | 81/2.2 | 363 | 8.4 | 5 |
| Example 34 | TP3-1.5 | 32/28 | 1.5 | 0.64 | 81/3.0 | 360 | 6.9 | 5 |
| Example 35. | TP4-3.0 | 152/260 | 3.0 | 0.64 | 81/2.4 | 374 | 9.3 | 5 |
| Example 36 | TP1-2.0 | 52/64 | 2.0 | 0.64 | 81/2.0 | 420 | 12.6 | 5 |
| Comp. Ex. 21 | $Sb_2O_3$ | 250 (Sb) | - | 0.64 | 75/2.5 | 397 | 12.4 | 3 |
| Comp.Ex. 22 | TB solution | 52/- | - | 0.64 | 81/8.0 | 393 | 12 | 2 |
| Comp.Ex. 23 | TB+P1 solution | 52/56 | - | 0.64 | 81/7.6 | 309 | 11.1 | 3 |

Industrial Applicability

The polyester fiber structure of the present invention has satisfactory color tone (color b* value) and excellent quality, and therefore when the polyester fiber structure is a fiber structure comprising main fiber made of polyester stable fiber and thermal bonding conjugated staple fiber, it is suitable for such purposes as bedding fixtures, furniture, automobile materials (cushion materials, ceiling materials, protective materials, etc.), clothing, filter materials, construction/engineering materials ($oundproofing or insulating materials), agricultural materials, sanitary materials (poultices, diaper, napkins, etc.) and the like.

**Claims**

1. A polyester fiber structure comprising polyester fiber comprising a polyester polymer as the major component, **characterized in that**

said fiber structure is selected from fiber structures having thicknesses of 5-100 mm and density of 0.01 to 0.10 g/cm$^3$, comprising main fiber made of polyester staple fiber and thermal bonding conjugated staple fiber wherein said polyester polymer is comprised in either or both said main fiber and the thermal bonding conjugated staple fiber, said polyester polymer is obtained by polycondensation of an aromatic dicarboxylate ester in the presence of a catalyst,
said catalyst comprises at least one ingredient selected from among mixture (1) and reaction product (2) below, mixture (1) is a mixture of the following components (A) and (B):

(A) a titanium compound component composed of at least one compound selected from the group consisting of:

(a) titanium alkoxides represented by the following general formula (I):

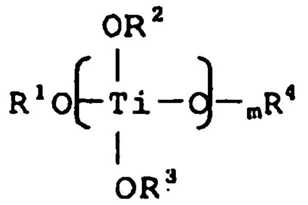

(I)

[wherein $R^1$, $R^2$, $R^3$ and $R^4$ each independently represent one species selected from among $C_{1-20}$ alkyl groups and phenyl groups, m represents an integer of 1-4 , and when m is an integer of 2, 3 or 4, the two, three or four $R^2$ and $R^3$ groups may be the same or different], and
(b) reaction products of titanium alkoxides of general formula (I) above with aromatic polyvalent carboxylic acids represented by the following general formula (II):

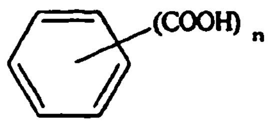

(II)

[wherein n represents an integer of 2-4]
or their anhydrides, and

(B) a phosphorus compound component composed of at least one compound represented by the following general formula (III) :

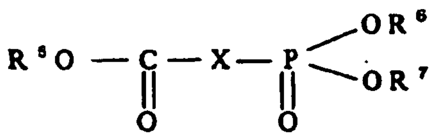

(III)

[wherein $R^5$, $R^6$ and $R^7$ each independently represent $C_{1-4}$ alkyl, and X represents at least one species selected from among $-CH_2-$ and $-CH_2(Y)$ (where Y represents phenyl)],
mixture (1) is used with a mixing ratio such that the ratio (%) $M_{Ti}$ of the millimoles of elemental titanium in said titanium compound component (A) with respect to the number of moles of said aromatic dicarboxylate ester and the ratio (%) $M_p$ of the millimoles of elemental phosphorus in the phosphorus compound component (B) with respect to the number of moles of said aromatic dicarboxylate ester satisfy the following relational expressions (i) and (ii):

$$1 \leq M_p/M_{Ti} \leq 15 \quad \text{(i)}$$

$$10 \le M_p + M_{Ti} \le 100 \quad (ii),$$

and reaction product (2) is the reaction product of the following components (C) and (D):
(C) a titanium compound component composed of at least one compound selected from the group consisting of:

(c) titanium alkoxides represented by the following general formula (IV):

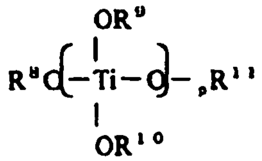

(IV)

[wherein $R^8$, $R^9$, $R^{10}$ and $R^{11}$ each independently represent, $C_{1-20}$ alkyl, p represents an integer of 1-3, and when p is 2 or 3, the two or three $R^9$ and $R^{10}$ groups may be the same or different], and
(d) reaction products of titanium alkoxides of general formula (IV) above with aromatic polyvalent carboxylic acids represented by general formula (II) above or their anhydrides, and

(D) a phosphorus compound component composed of at least one phosphorus compound represented by the following general formula (V):

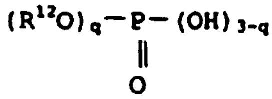

(V)

[wherein $R^{12}$ represents $C_{1-20}$ alkyl or $C_{6-20}$ aryl, and q represents an integer of 1 or 2], and the reaction ratio of component (D) with respect to component (C) is in the range of 1:1 to 3:1, in terms of the ratio of the moles of phosphorus atoms in component (D) to the moles of titanium atoms in component (C) (P/Ti), and wherein the fiber structure is thermally anchored at least at some of the points of contact between the thermal bonding conjugated staple fibers and main fibers and/or points of contact between the thermal bonding conjugated staple fibers themselves within said fiber structure.

**2.** A polyester fiber structure according to claim 1, wherein component (A) of said catalyst mixture (1) and component (C) of said reaction product (2) for the catalyst contains the respective titanium alkoxide (a) and titanium alkoxide (c) each in a reaction molar ratio in the range of 2:1 to 2:5 with respect to the aromatic polyvalent carboxylic acid or its anhydride.

**3.** A polyester fiber structure according to claim 1, wherein the phosphorus compound of general formula (V) for said reaction product (2) is selected from among monoalkyl phosphates.

**4.** A polyester fiber structure according to claim 1, wherein said aromatic dicarboxylate ester is produced by transesterification of an aromatic dicarboxylic acid dialkyl ester and an alkylene glycol ester.

**5.** A polyester fiber structure according to claim 1, wherein said polyester polymer has an L* value of 77-85 and a b* value of 2-5 based on the L*a*b* color system (JIS 28729).

**6.** A polyester fiber structure according to claim 1, wherein said thermal bonding conjugated staple fiber comprises a heat sealing polymer and a fiber-forming thermoplastic polymer, with the heat sealing polymer exposed on the fiber surfaces.

**7.** A polyester fiber structure according to claim 1, wherein said thermal bonding conjugated staple fiber has a side-by-side structure.

8. A polyester fiber structure according to claim 1, wherein said thermal bonding conjugated staple fiber has a concentric or eccentric core-sheath structure, where the concentric or eccentric core is formed of said fiber-forming thermoplastic polymer and the concentric or eccentric sheath is formed of a heat sealing polymer.

9. A polyester fiber structure according to claim 6, wherein said fiber forming thermoplastic polymer is said polyester polymer.

10. A polyester fiber structure according to claim 6, wherein said heat sealing polymer is selected from among polyurethane elastomers, polyester elastomers, inelastic polyester homopolymers and copolymers, polyolefin homopolymers and copolymers, and polyvinyl alcohol polymers.

11. A polyester fiber structure according to claim 1, wherein said main fiber comprises said polyesterpolymer.

12. A polyester fiber structure according to claim 1, which is used for purposes which involve contact with food.

**Patentansprüche**

1. Eine Polyesterfaserstruktur, umfassend Polyesterfaser, die ein Polyesterpolymer als Hauptbestandteil umfasst, **dadurch gekennzeichnet, dass**
die Faserstruktur aus Faserstrukturen ausgewählt ist, die Dicken von 5-100 mm und eine Dichte von 0,01 bis 0,10 g/cm$^3$ aufweisen, umfassend eine Hauptfaser, die aus Polyesterstapelfaser gemacht ist, und eine thermisch bindende konjugierte Stapelfaser,
wobei das Polyesterpolymer entweder in der Hauptfaser oder der thermisch bindenden konjugierten Stapelfaser oder beiden enthalten ist,
das Polyesterpolymer durch Polykondensation eines aromatischen Dicarboxylatesters in Gegenwart eines Katalysators erhalten wird,
der Katalysator mindestens einen Bestandteil, ausgewählt aus nachstehendem Gemisch (1) und Reaktionsprodukt (2), umfasst,
Gemisch (1) ein Gemisch der folgenden Komponenten (A) und (B) ist:

(A) einer Titanverbindungskomponente, zusammengesetzt aus mindestens einer Verbindung, ausgewählt aus der Gruppe bestehend aus:

(a) Titanalkoxiden, dargestellt durch die folgende allgemeine Formel (I):

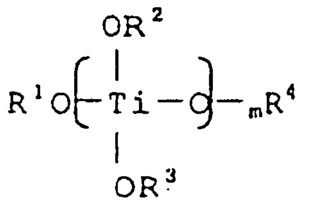

(I)

[wobei $R^1$, $R^2$, $R^3$ und $R^4$ jeweils unabhängig eine Spezies, ausgewählt aus $C_{1-20}$-Alkylresten und Phenylresten, bedeuten, m eine ganze Zahl von 1-4 darstellt, und wenn m eine ganze Zahl von 2, 3 oder 4 ist, die zwei, drei oder vier $R^2$ - und $R^3$-Reste gleich oder verschieden sein können] und
(b) Reaktionsprodukten von Titanalkoxiden der vorstehenden allgemeinen Formel (I) mit aromatischen mehrwertigen Carbonsäuren, dargestellt durch die folgende allgemeine Formel (II):

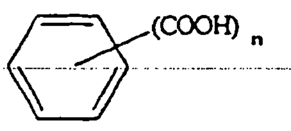

(II)

[wobei n eine ganze Zahl von 2-4 darstellt]
oder deren Anhydriden und

(B) einer Phosphorverbindungskomponente, zusammengesetzt aus mindestens einer Verbindung, dargestellt durch die folgende allgemeine Formel (III):

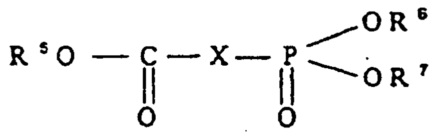

(III)

[wobei $R^5$, $R^6$ und $R^7$ jeweils unabhängig $C_{1-4}$-Alkyl bedeuten und X mindestens eine Spezies, ausgewählt aus $-CH_2-$ und $-CH_2(Y)$, bedeutet (wobei Y Phenyl bedeutet)],
Gemisch (1) mit einem derartigen Mischungsverhältnis verwendet wird, dass das Verhältnis (%) $M_{Ti}$ der Millimol an elementarem Titan in der Titanverbindungskomponente (A), bezogen auf die Molzahl des aromatischen Dicarboxylatesters, und das Verhältnis (%) $M_p$ der Millimol an elementarem Phosphor in der Phosphorverbindungskomponente (B), bezogen auf die Molzahl des aromatischen Dicarboxylatesters, die folgenden Beziehungen (i) und (ii) erfüllen:

$$1 \leq M_p / M_{Ti} \leq 15 \qquad (i)$$

$$10 \leq M_p + M_{Ti} \leq 100 \qquad (ii),$$

und Reaktionsprodukt (2) das Reaktionsprodukt der folgenden Komponenten (C) und (D) ist:
(C) einer Titanverbindungskomponente, zusammengesetzt aus mindestens einer Verbindung, ausgewählt aus der Gruppe bestehend aus:

(c) Titanalkoxiden, dargestellt durch die folgende allgemeine Formel (IV):

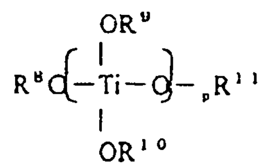

(IV)

[wobei $R^8$, $R^9$, $R^{10}$ und $R^{11}$ jeweils unabhängig $C_{1-20}$-Alkyl bedeuten, p eine ganze Zahl von 1-3 darstellt, und wenn p 2 oder 3 ist, die zwei oder drei $R^9$- und $R^{10}$-Reste gleich oder verschieden sein können] und
(d) Reaktionsprodukten von Titanalkoxiden der vorstehenden allgemeinen Formel (IV) mit aromatischen mehrwertigen Carbonsäuren, dargestellt durch die vorstehende allgemeine Formel (II), oder deren Anhydriden und (D) einer Phosphorverbindungskomponente, zusammengesetzt aus mindestens einer Phosphorverbindung, dargestellt durch die folgende allgemeine Formel (V):

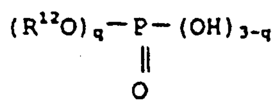

(V)

[wobei $R^{12}$ $C_{1-20}$-Alkyl oder $C_{6-20}$-Aryl bedeutet und q eine ganze Zahl von 1 oder 2 darstellt] und
das Reaktionsverhältnis von Komponente (D) bezogen auf Komponente (C) im Bereich von 1:1 bis 3:1 liegt, ausgedrückt als das Verhältnis der Mol an Phosphoratomen in Komponente (D) zu den Mol an Titanatomen

in Komponente (C) (P/Ti), und
wobei die Faserstruktur zumindest an einigen der Kontaktpunkte zwischen den thermisch bindenden konjugierten Stapelfasern und den Hauptfasern und/oder Kontaktpunkten zwischen den thermisch bindenden konjugierten Stapelfasern selbst innerhalb der Faserstruktur thermisch verankert ist.

**2.** Eine Polyesterfaserstruktur nach Anspruch 1, wobei Komponente (A) des Katalysatorgemischs (1) und Komponente (C) des Reaktionsprodukts (2) für den Katalysator das jeweilige Titanalkoxid (a) und Titanalkoxid (c) in einem Reaktions-Molverhältnis im Bereich von 2:1 bis 2:5, bezogen auf die aromatische mehrwertige Carbonsäure oder deren Anhydrid, enthält.

**3.** Eine Polyesterfaserstruktur nach Anspruch 1, wobei die Phosphorverbindung der allgemeinen Formel (V) für das Reaktionsprodukt (2) aus Monoalkylphosphaten ausgewählt ist.

**4.** Eine Polyesterfaserstruktur nach Anspruch 1, wobei der aromatische Dicarboxylatester durch Umesterung eines aromatischen Dicarbonsäuredialkylesters und eines Alkylenglycolesters hergestellt wird.

**5.** Eine Polyesterfaserstruktur nach Anspruch 1, wobei das Polyesterpolymer einen L*-Wert von 77-85 und einen b*-Wert von 2-5, bezogen auf das L*a*b*-Farbsystem(JIS 28729), aufweist.

**6.** Eine Polyesterfaserstruktur nach Anspruch 1, wobei die thermisch bindende konjugierte Stapelfaser ein Heißsiegelpolymer und ein faserbildendes thermoplastisches Polymer umfasst, wobei das Heißsiegelpolymer auf den Faseroberflächen freiliegt.

**7.** Eine Polyesterfaserstruktur nach Anspruch 1, wobei die thermisch bindende konjugierte Stapelfaser eine Seite-an-Seite-Struktur aufweist.

**8.** Eine Polyesterfaserstruktur nach Anspruch 1, wobei die thermisch bindende konjugierte Stapelfaser eine konzentrische oder exzentrische Kern-Mantel-Struktur aufweist, wobei der konzentrische oder exzentrische Kern aus dem faserbildenden thermoplastischen Polymer gebildet ist und der konzentrische oder exzentrische Mantel aus einem Heißsiegelpolymer gebildet ist.

**9.** Eine Polyesterfaserstruktur nach Anspruch 6, wobei das faserbildende thermoplastische Polymer das Polyesterpolymer ist.

**10.** Eine Polyesterfaserstruktur nach Anspruch 6, wobei das Heißsiegelpolymer aus Polyurethanelastomeren, Polyesterelastomeren, unelastischen Polyester-Homopolymeren und -Copolymeren, Polyolefin-Homopolymeren und -Copolymeren und Polyvinylalkohol-Polymeren ausgewählt ist.

**11.** Eine Polyesterfaserstruktur nach Anspruch 1, wobei die Hauptfaser das Polyesterpolymer umfasst.

**12.** Eine Polyesterfaserstruktur nach Anspruch 1, die für Zwecke verwendet wird, die den Kontakt mit Lebensmitteln beinhalten.

## Revendications

**1.** Structure en fibre de polyester comprenant une fibre de polyester comprenant un polymère de polyester en tant que composant principal, **caractérisée en ce que**
ladite structure en fibre est choisie parmi les structures en fibre possédant une épaisseur de 5 à 100 mm et une densité de 0,01 à 0,10 g/cm$^3$, comprenant une fibre principale constituée d'une fibre discontinue de polyester et une fibre discontinue conjuguée thermoliante, ledit polymère de polyester étant compris dans ladite fibre principale et/ou la fibre discontinue conjuguée thermoliante,
ledit polymère de polyester est obtenu par polycondensation d'un ester de dicarboxylate aromatique en présence d'un catalyseur,
ledit catalyseur comprend au moins un ingrédient choisi parmi un mélange (1) et un produit réactionnel (2) ci-dessous, le mélange (1) est un mélange des composants (A) et (B) suivants :

(A) un composant à base de titane composé d'au moins un composé choisi dans le groupe constitué par :

(a) les alcoxydes de titane représentés par la formule générale (I) suivants :

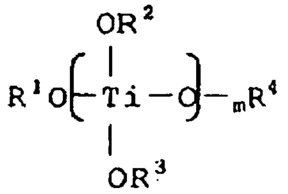

(I)

[dans laquelle $R^1$, $R^2$, $R^3$ et $R^4$ représentent chacun indépendamment une espèce choisie parmi les groupes alkyle en $C_1$-$C_{20}$ et les groupes phényle, m représente un nombre entier valant de 1 à 4, et lorsque m est un nombre entier valant 2, 3 ou 4, les deux, trois ou quatre groupes $R^2$ et $R^3$ peuvent être identiques ou différents], et

(b) les produits réactionnels d'alcoxydes de titane de formule générale (I) ci-dessus avec des acides carboxyliques polyvalents aromatiques représentés par la formule générale (II) suivante :

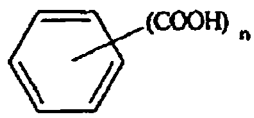

(II)

[dans laquelle n représente un nombre entier valant de 2 à 4]
ou leurs anhydrides, et

(B) un composant à base de phosphore composé d'au moins un composé représenté par la formule générale (III) suivante :

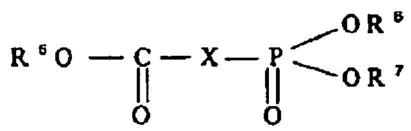

(III)

[dans laquelle $R^5$, $R^6$ et $R^7$ représentent chacun indépendamment un groupe alkyle en $C_1$-$C_4$, et X représente au moins une espèce choisie parmi $-CH_2-$ et $-CH_2(Y)$ (où Y représente un groupe phényle)],
le mélange (1) est utilisé avec un rapport de mélange tel que le rapport (%) $M_{Ti}$ des millimoles du titane élémentaire dans ledit composant à base de titane (A) par rapport au nombre de moles dudit ester de dicarboxylate aromatique et le rapport (%) $M_p$ des millimoles de phosphore élémentaire dans le composant à base de phosphore (B) par rapport au nombre de moles dudit ester de dicarboxylate aromatique satisfont les expressions relationnelles (i) et (ii) suivantes :

$$1 \leq M_p/M_{Ti} \leq 15 \qquad (i)$$

$$10 \leq M_p + M_{Ti} \leq 100 \qquad (ii),$$

et le produit réactionnel (2) est le produit réactionnel des composants (C) et (D) suivantes :
(C) un composant à base de titane composé d'au moins un des composés choisis dans le groupe constitué par :

(c) les alcoxydes de titane représentés par la formule générale (IV) suivante :

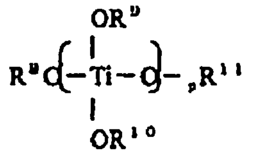 (IV)

[dans laquelle $R^8$, $R^9$, $R^{10}$ et $R^{11}$ représentent chacun indépendamment un groupe alkyle en $C_1$-$C_{20}$, p représente un nombre entier valant de 1 à 3, et lorsque p est un nombre entier valant 2 ou 3, les deux ou trois groupes $R^9$ et $R^{10}$ peuvent être identiques ou différents], et

(d) les produits réactionnels d'alcoxydes de titane de formule générale (IV) ci-dessus avec des acides carboxyliques polyvalents aromatiques représentés par la formule générale (II) ci-dessus ou leurs anhydrides, et

(D) un composant à base de phosphore composé d'au moins un composé à base de phosphore représenté par la formule générale (V) suivants :

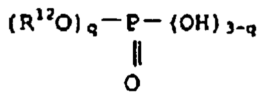 (V)

[dans laquelle $R^{12}$ représente un groupe alkyle en $C_1$-$C_{20}$ ou un groupe aryle en $C_6$-$C_{20}$, et q représente un nombre entier valant 1 ou 2], et
le rapport réactionnel du composant (D) en ce qui concerne le composant (C) est compris dans la plage allant de 1/1 à 3/1, pour ce qui est du rapport des moles d'atomes de phosphore dans le composant (D) par rapport aux moles d'atomes de titane dans le composant (C) (P/Ti), et
dans laquelle la structure en fibre est thermiquement ancrée au moins au niveau de certains points de contact entre les fibres discontinues conjuguées thermoliantes et les fibres principales et/ou points de contact entre les fibres discontinues conjuguées thermoliantes entre elles dans ladite structure en fibre.

**2.** Structure en fibre de polyester selon la revendication 1, dans laquelle le composant (A) dudit mélange catalytique (1) et le composant (C) dudit produit réactionnel (2) pour le catalyseur comprend respectivement l'alcoxyde de titane (a) et l'alcoxyde de titane (c), chacun selon un rapport molaire réactionnel compris dans la plage allant de 2/1 à 2/5 en ce qui concerne l'acide carboxylique polyvalent aromatique ou son anhydride.

**3.** Structure en fibre de polyester selon la revendication 1, dans laquelle le composant à base de phosphore de formule générale (V) pour ledit produit réactionnel (2) est choisi parmi les phosphates de monoalkyle.

**4.** Structure en fibre de polyester selon la revendication 1, dans laquelle ledit ester de dicarboxylate aromatique est produit par transestérification d'un ester dialkylique d'acide dicarboxylique aromatique et d'un ester d'alkylène glycol.

**5.** Structure en fibre de polyester selon la revendication 1, dans laquelle ledit polymère de polyester possède une valeur L* de 77 à 85 et une valeur b* de 2 à 5 basées sur le système de couleur L*a*b* (JIS 28729).

**6.** Structure en fibre de polyester selon la revendication 1, dans laquelle ladite fibre discontinue conjuguée thermoliante comprend un polymère thermosoudable est un polymère thermoplastique fibrogène, le polymère thermosoudable étant visible sur les surfaces des fibres.

**7.** Structure en fibre de polyester selon la revendication 1, dans laquelle la fibre discontinue conjuguée thermoliante possède une structure côte à côte.

**8.** Structure en fibre de polyester selon la revendication 1, dans laquelle la fibre discontinue conjuguée thermoliante possède une structure coeur-gaine concentrique ou excentrique, le coeur concentrique ou excentrique étant constitué dudit polymère thermoplastique fibrogène et la gaine concentrique ou excentrique étant constituée d'un polymère thermosoudable.

**9.** Structure en fibre de polyester selon la revendication 6, dans laquelle ledit polymère thermoplastique fibrogène est ledit polymère de polyester.

**10.** Structure en fibre de polyester selon la revendication 6, dans laquelle ledit polymère thermosoudable est choisi parmi les élastomères de polyuréthane, les élastomères de polyester, les homopolymères et les copolymères de polyester non élastiques, les homopolymères et les copolymères de polyoléfine, et les polymères d'alcool polyvinylique.

**11.** Structure en fibre de polyester selon la revendication 1, dans laquelle ladite fibre principale comprend ledit polymère de polyester.

**12.** Structure en fibre de polyester selon la revendication 1, qui est utilisée à des fins impliquant un contact avec un aliment.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 59046258 A
- JP 58038722 A
- JP 7138354 A
- US 6231976 B
- EP 1110988 A
- US 6197856 B
- WO 99010573 A
- US 6359079 B